**Europäisches Patentamt**

**European Patent Office**

**Office européen des brevets**

(19)

(11) **EP 1 364 703 A1**

## (12) EUROPEAN PATENT APPLICATION
published in accordance with Art. 158(3) EPC

(43) Date of publication:
26.11.2003 Bulletin 2003/48

(21) Application number: 02716443.3

(22) Date of filing: 29.01.2002

(51) Int Cl.7: **B01J 19/08**, C01B 3/04,
C01B 3/22, C10G 15/00,
C09K 3/00, A23B 7/144

(86) International application number:
PCT/JP02/00642

(87) International publication number:
WO 02/060576 (08.08.2002 Gazette 2002/32)

(84) Designated Contracting States:
AT BE CH CY DE DK ES FI FR GB GR IE IT LI LU
MC NL PT SE TR
Designated Extension States:
AL LT LV MK RO SI

(30) Priority: 30.01.2001 JP 2001021734
28.12.2001 JP 2001399467

(71) Applicant: Honda Giken Kogyo Kabushiki Kaisha
Minato-ku, Tokyo 107-8556 (JP)

(72) Inventor: KITADA, Masayoshi
Wako-shi, Saitama 351-0193 (JP)

(74) Representative:
Böhm, Brigitte, Dipl.-Chem. Dr. et al
Weickmann & Weickmann
Patentanwälte
Postfach 860 820
81635 München (DE)

(54) **ACTIVE STRUCTURE, APPARATUS FOR ACTIVATING SUBSTANCE, AND METHOD OF ACTIVATING SUBSTANCE**

(57)     Particles constituted of either a single element selected from the group consisting of silicon, titanium, nickel, and samarium or a carbon fluoride are disposed in such respective positions that the wave energy inherent in the element or carbon fluoride is amplified to thereby enable the particles to have, among these, a field where energy concentration occurs. Thus, an active structure is obtained which is capable of generating hydrogen by liberating hydrogen from the hydrogen bonds of water or a hydrocarbon without applying an external energy thereto.

FIG.1

**Description**

TECHNICAL FIELD

The present invention relates to an active structure, an apparatus for activating a substance to be treated, comprising the active structure, and a process for activating such a substance. More specifically, the present invention relates to an active structure which activates a substance to be treated in which an energy focused place among particles comprising a specific element is provided, and a substance to be treated, particularly a substance having a covalent bond or covalent bonds such as water or a hydrocarbon, is passed through or stayed in such an energy focused place, to thereby activate the substance, and an apparatus and process for activating a substance utilizing the same.

BACKGROUND ARTS

In recent years, from the viewpoints of drying up the existing resources such as petroleum, attention has been paid to hydrogen as an alternative fuel.
Conventionally, electrolysis of water, methanol or such has been commonly process for producing hydrogen as an energy source.
For example, in the case of electrolyzing water, hydrogen is brought about according to the following equation (1):

$$H_2O + H_2 \rightarrow 1/2O_2 \tag{1}$$

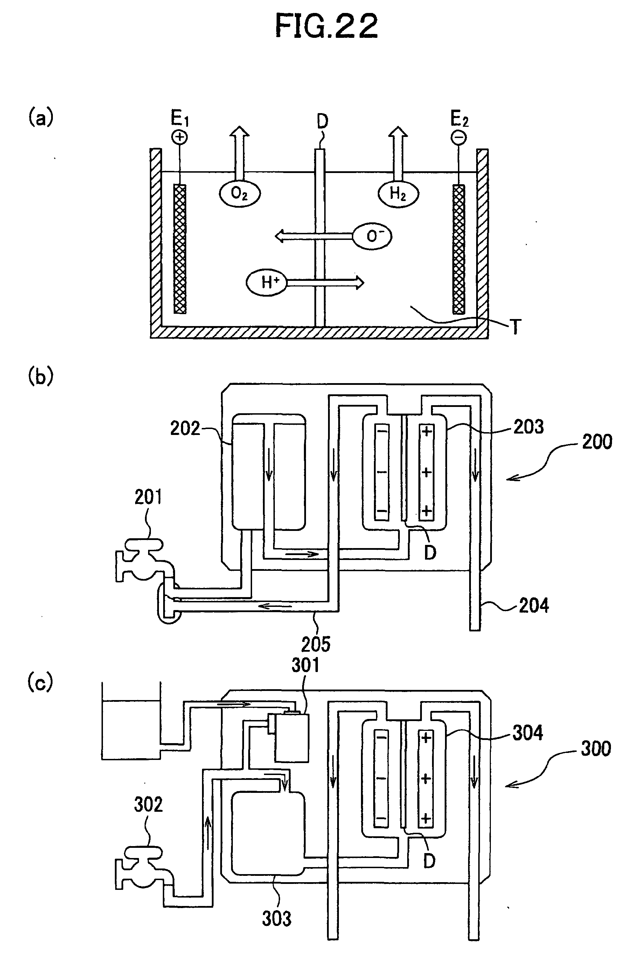

In this case, a potential difference of at least 1.23 V under standard conditions is required for electrolyzing the water to obtain hydrogen, but due to a high electric resistance possessed by the water, the water electrolysis cannot be performed unless much more potential difference is applied in practice. For this reason, an aqueous solution having an electrolyte such as an alkali dissolved in water is electrolyzed for generating hydrogen, but, there are disadvantageous in that an alkaline product by-produced should be removed and that decomposition ratio is unduly low.
As alternative process for generating hydrogen, thermal decomposition of water may be considered. It is, however, required, for thermally decomposing water to generate hydrogen, to carry out the thermal decomposition at a high temperature as high as approximately $4300°C$, which requires much more energy and making it impossible to put the thermal decomposition of water into practical use.
Also, as a process for generating hydrogen without applying any external energy, an alkali metal or alkaline earth metal such as aluminum, magnesium, or sodium is added to water to bring about a chemical reaction can be considered, but these metals are expensive, and a reaction takes place rapidly, making it difficult to put the chemical reaction into an industrial application.
In a hydrocarbon, such as methanol or gasoline, a bonding energy between hydrogen and carbon is relatively low and, thus, the potential difference required for electrolyzing the hydrocarbon may be considered to be relatively low, but the electrolysis of the hydrocarbon involves the formation of by-products such as CO and $CO_2$ during the course of the reaction and, therefore, the process should be required for removing such by-products.
On the other hand, activation of water has been made in various fields including medical fields, pharmaceutical fields, cosmetic fields, food industries, agricultural fields, domestic application, and other fields.
The electrolyzed water is prepared by electrolyzing water using such an apparatus as shown in FIG. 22 (a) . At this time, tap water is used for the electrolysis. The tap water is an electrolyte containing metals such as calcium, magnesium, sodium, and potassium in salt forms thereof.
Specifically, as shown in FIG. 22(a), an anode E1 and a cathode E2 are provided on both sides of a dividing plate of a water tank T in which the interior is divided by a diaphragm D, respectively, an electrolyte liquid such as tap water is incorporated in the water tank, and a prescribed current is run between both electrodes E1 and E2, to thereby produce the electrolyzed water.
At the side of the anode E1, the water molecule is separated into $H^+$ (hydrogen ions), $O_2$ (oxygen molecule) and $e^-$ (electrons) to thereby increase an hydrogen ion concentration and to dissolve the oxygen molecules in the water up to the saturation concentration at that temperature. At this time, large amounts of ozone, $O_2$ radicals, oxidative ions having an oxidation powers are generated. Also, if there exists an electrolyte such as sodium chloride in the water, the reaction of such an electrolyte occurs to produce corresponding substances derived from the electrolyte. In this case, a strongly acidic water is produced at the anode side. As described above, at the side of the anode E1, an acidic water having an acidity is prepared.

On the other hand, at the side of the cathode E2, electron (e⁻) is acted upon the water to increase OH⁻ (hydroxyl ion), which is dissolved in the water as $H_2$ (hydrogen molecule). Furthermore, as one characteristic of the water, at which large amounts of reductive ions are generated, substances taking part in the oxidation such as oxygen are significantly decreased. Since parts of metals such as calcium, magnesium, sodium, potassium, magnesium, sodium, and potassium are ionized and attracted to the cathode E2, the existence of these metal ions dissolved in the water is also one of the characteristics of the water at side of the cathode E2.

The metal ions dissolved and existing at the side of the cathode E2 exist as a state that they are easily digested and adsorbed in comparison with the corresponding salt states such as sodium chloride (the state ordinarily existing in tap water) .

The apparatus for producing the electrolyzed water as described above can be roughly divided into two types:

The first apparatus concerns an apparatus, generally called "apparatus for forming an alkaline ion water", in which tap water, purified water or mineral water is directly electrolyzed (see FIG. 22(b)). The second apparatus an apparatus, generally called "apparatus for forming strongly acidic water", in which water having an electrolyte including sodium chloride and potassium chloride added thereto is electrolyzed (see FIG. 22(c)).

Tapped water is used to be passed through a device 200 for purifying water to perform the electrolysis, and the resultant electrolyzed water at the minus side is used as the alkaline ion water as is.

First, the water entering from a water supply 201 is transferred to a device 202 for purifying water at which musty smell, chlorine, trihalomethane and the like are removed (pretreatment). Subsequently, the pretreated water is transferred to an electrolysis tank 203 composed of electrodes E1 and E2, and a diaphragm D as outlined in FIG. 22 (a) (see FIG. 22 (a)) . The water transferred to the electrolysis tank 203 is electrolyzed, and at the anode side E1 and at the cathode side E2 via the diaphragm D, pH levels of the water are slanted, respectively to prepare two types of the water containing oxidative ions and reductive ions, respectively.

After being passed through the electrolysis tank 3, these two types of the water flow separate paths (main water hose 204 and drainage hose 205), respectively. Specifically, the alkaline ion water exiting at the minus side is passed through the main water hose 204 and flows towards a tap specialized for alkaline ion water, and on the other hand, the acidic water from the plus side is transferred to the drainage hose 205, and then exhausted, e.g., within a kitchen sink.

It is said that the alkaline ion water produced as described above can effectively be utilized in various applications.

For example, domestic applications represented by cooking of the alkaline ion water are as follows:

1. Rice Cooking:

The alkaline ion water is said to be suitable for rice cooking. Specifically, the use of the alkaline ion water cooks lustrous, chewy rice. Also, the taste of the rice cooked with the alkaline ion water is not spoiled even after it is cooled and, thus, it is suitable for producing a rice ball and a packed lunch.

2. Cooking, Boiling, Stewing:

The alkaline ion water is said to be suitable for cooking vegetables or such. For example, in the case of cooking a vegetable or vegetables, particularly, edible roots, the use of the alkaline ion water boils the vegetable(s) in a light texture without loosing its (their) shape(s). Also, boiled water does not become cloudy and good stock can be prepared from the vegetable (s) and, thus, it is optimal for preparing curried food, and stew, boiling of vegetables.

3. Reconstitution:

The alkaline ion water is said to be suitably used for reconstituting dry foods, beans or such. For example, if the alkaline water is used for reconstituting beans, the beans can be cooked for a period about 2/3 the use of tap water. Also, for example, if the alkaline ion water is used to reconstitute a dried shiitake mushroom, it can be reconstituted within 10 to 20 minutes, which is very short period of time.

4. Removal of Bitter/Harsh Taste:

It is said that the alkaline ion water can available be used for removing bitter and/or harsh tastes from vegetables. For example, when sharp, acid, or bitter vegetables such as a burdock, an eggplant, a lotus root, an udo (a mountain plant which produces fat, white, edible stalks), and a leek are cut into pieces with a suitable size and then soaked in the alkaline water, bitter and/or harsh tastes can be removed within a shorter period of the time than that in the case of using tap water. When the alkaline ion water is used for boiling spinach, the bitter taste can be removed and a brilliant boiled spinach can be obtained.

5. Making Stock:

It is said that when the alkaline ion water is used for making stock from sea tangle, dried bonito, dried small sardine or such, the resultant stock dose not become cloudy and concentrated stock can be obtained in comparison with the case of using tap water.

6. Tea, Coffee etc.:

It is said that since the alkaline ion water has a strong extraction performance, it can be suitably used for preparing green tea, tea, coffee, oolong tea or such. Also, it is said that only utilizing such an amount of green tea leaves or coffee as half the predetermined amount, good green tea or coffee can be prepared.

7. Dilution of Spirits:

It is said that the alkaline ion water can be used to dilute spirits. Specifically, since the alkaline ion water itself is rapidly digested in the stomach and intestines, when sprits such as whisky or shouchu is diluted with the alkaline water, the feeling that something sits on the stomach does not remain unlike the dilution with tap water or mineral water.

8. Scavenging of Activated Oxygen:

Although the detailed reasons are not understood, various experiments have revealed that when the alkaline ion water is kept drinking, the activated oxygen can be scavenged.

However, when the electrolyzed water is prepared utilizing such an apparatus, there exists the problems that a large amount of energy is required for electrolyzing the water and the apparatus becomes complicated.

On the other hand, the acidic water is prepared by electrolyzing tap water having a salt added thereto and using the water at the plus side. For example, the acidic water is produced utilizing an apparatus for producing an acidic water as shown in FIG. 22(c). The apparatus 300 for producing an acidic water possesses no device for purifying water and a metering pump 301 which meters an electrolyte such as sodium chloride (NaCl)

For example, in the case of an industrial apparatus 300 for producing an acidic water in the form of being directly connected to water supply pipe as shown in FIG. 22 (c) , a metered amount of an electrolyte (such as sodium chloride) metered by a metering pump 301 is added to the water entering from a water supply 302. Subsequently, the water having a prescribed amount of the electrolyte metered is incorporated in a mixer 303 for mixing water to be homogeneously mixed to prepare an aqueous electrolyte solution (for example, saline water).

The resulting aqueous electrolyte solution is then incorporated in an electrolysis tank 304 (for the detail of the electrolysis tank 304, see FIG. 22(a)).

The aqueous electrolyte solution within the electrolysis tank 304 is then adjusted so that an intended amount of the chlorine compound is produced and that a pH value and a oxidation-reduction potential (ORP) becomes a prescribed amount, and then electrolyzed.

In the case of a household or portable apparatus for producing an acidic water, which is used, has a configuration that the electrolysis tank is a tank type as shown in FIG. 22 (a) in which the diaphragm and the electrodes are provided. Specifically, the household or portable apparatus for producing an acidic water does not have any metering pump 301 and any mixer 303 as possessed by the apparatus shown in FIG. 22 (c) . For this reason, the user must prepare an aqueous electrolyte solution in advance and must incorporate the prepared aqueous electrolyte solution into the electrolysis tank to be electrolyzed.

It is said that the acidic water thus prepared can availably used for disinfection, sterilization, pasteurization and the like. Specifically, it is said that the exposure of the acidic water kills bacteria, i.e. for 30 second or more for weak resistant bacteria and for approximately 2 minutes for highly resistant bacteria.

As in the case of the apparatus 200 for producing an alkaline ion water described above, the apparatus 300 for producing an acidic water has the problems in using the preparation of the electrolyzed water that a large amounts of energy is required for electrolyzing water and the apparatus becomes complicated.

As another activation of water, magnification treatments and electro-magnification treatments of water have been performed for the purpose of dividing the clusters of water into small pieces to thereby activate water. Specifically, water is generally represented by $H_2O$, which comprises two hydrogen atoms and one oxygen atom, but the water is actually in the state of a large mass composed of a large number of water molecules ($H_2O$) bonded through the hydrogen bonding. As just mentioned, the water molecule ($H_2O$) does not exist alone, but the water molecule ($H_2O$ forms as a larger mass by connecting the water molecules ($H_2O$) with each other (the mass is called a cluster; for example, in the case of tap water, it is said that from 30 to 50 water molecules are connected to make up a cluster.

To the water in the form of the cluster by the hydrogen bonding of a plurality of water molecules to form a mass, is applied to a magnetic force or an electro-magnetic wave such as far infrared ray for imparting the water cluster to a wavelength resonating with the water molecule, whereby the hydrogen bonding is cleaved to be a small mass of the water molecules (decreasing of the cluster).

When the mass of the water molecules is smaller, specifically, when the cluster is smaller, the enthalpy of the water is increased to activate the water. Specifically, since a water mass having a smaller cluster has a smaller energy for consuming the bonding energy among the molecules, the mass of the water molecules is easy to be moved.

When the cluster of the water becomes small as described above, it is said that the following effects are exhibited as a rule;

    1. The effect for decreasing dielectric constant;
    2. The effect for aggregating and settling colloidal particles, which is fine solids existing in water (consequently, the effect for preventing the unclearness of water due to the colloidal particles);
    3. The effect for preventing the generation of algae;
    4. The effect for increasing oxygen dissolved in water;
    5. The effect for the prevention the interior of the piping from being rusted and scaled;
    6. The effect for increasing the growth ratio of aquatic organisms such as fish; and the like.

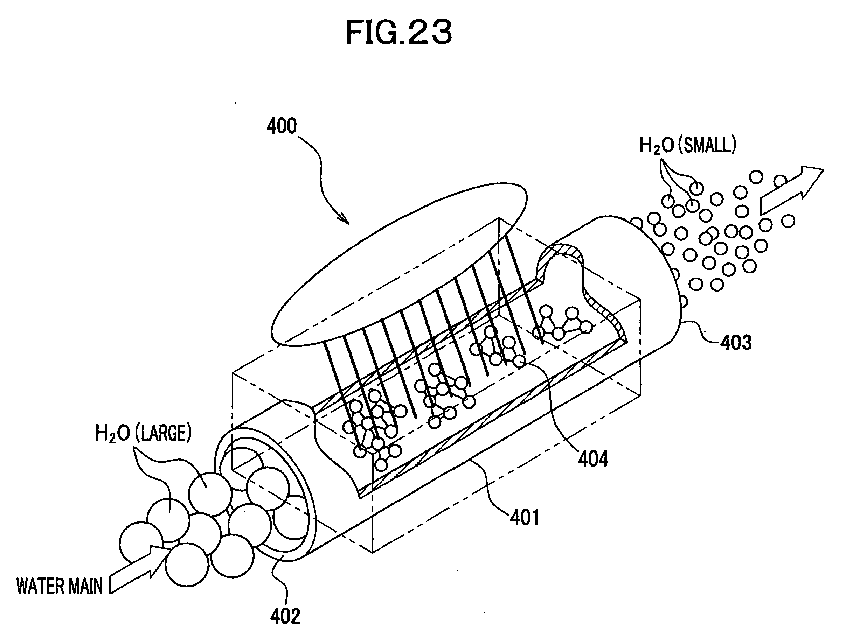

An apparatus 400 shown in FIG. 23 is composed of a body 401 of the apparatus possessing an inlet 401 in which tap water enters, an outlet 402 from which activated water exits, an interior of the body 401 being filled with a metal having a strongly magnetic force such as neodymium, cobalt or niobium.

Water ($H_2O$/LARGE) directed from the inlet 402 having a large cluster becomes water ($H_2O$/SMALL) having a small cluster by the action of the metal having a strong magnet force accommodated within the apparatus, which brings about an MHR (Magnet Hydro Reaction) for splitting the cluster, after which the water ($H_2O$/SMALL) having a small cluster is exhausted from the outlet 403.

In such an apparatus, the cluster can make small without applying any external energy.

However, even if the water is treated with such a metal having a strongly magnetic force, the cluster of the water cannot be cut off in a sufficient manner, and there is a strong requirement for making the cluster of water much smaller.

Furthermore, in this apparatus, the cluster is cut off by directly bringing the water into contact with the metal having a strongly magnetic force, but such a direct contact of water with the metal unduly leads to the elution of the metal oxide, the metal chloride and the like into the water by the action of oxygen, chlorine and the like dissolved in water.

Also, the metals themselves are too expensive, which makes the cost of the apparatus high.

In recent years, from the viewpoints of the environmental problems, the reduction of the exhaust amount of carbon dioxide and the elimination of gases containing harmful substances suh as nitrogen oxides ($NO_x$), sulfur oxides ($SO_x$), hydrogen sulfide (HS), and ammonia ($NH_3$) have been appealed.

In particular, techniques which can effectively eliminate carbon dioxide and harmful substances exhausted from factories, incinerators for burning up garbage, vehicles, especially diesel-engine carried vehicles have been desired.

SUMMARY OF THE INVENTION

An object of the present invention is, therefore, to provide an activating structure which can liberate hydrogen from hydrogen bond in water and hydrocarbons to generate hydrogen without applying any external energy.

Another object of the present invention is to provide an apparatus for activating a substance having a simple configuration which can generate hydrogen from water, or a hydrocarbon without dealing with the removal of any byproduct.

Still another object of the present invention is to provide an apparatus for sufficiently activating water without applying any external energy.

Still further object of the present invention is to provide an apparatus for removing harmful substances from a gas containing the harmful substances without applying any external energy.

The inventor has been made a serious study and research in light of the object described above. As a result, it has surprisingly been discovered that when particles composed of a specific element are arranged in a prescribed arrangement, a high energy is generated among the particles, which can be used for activating substances, resulting in the present invention.

Also, as a result of further making a study and research by the inventor, it has been found that effect similar to the metal element can be obtained if a carbon fluoride is used.

Specifically, the present invention is directed to an activating structure comprising particles consisting essentially of a single element selected from the group consisting of silicon, titanium, nickel, and samarium, or of a carbon fluoride placed in the position where a wave motion energy inherent to each of the elements or the carbon fluoride is amplified to make up an energy focused place among the particles.

By such a configuration, a high energy (or an interaction thereof) among the particles is generated, i.e., an energy focused place is generated, and a substance can be activated by passing the substance through the energy focused place , or by staying the substance in the energy focused place . The activating structure of the present invention can be handled resembling the existing catalyst. The activating structure of the present invention is distinguished from the conventional catalyst in that it activates a substance by passing the substance through the energy focused place , or by the residence of the substance in the energy focused place .

Also, the activating structure of the present invention can activate a substance to be treated even under dark conditions, i.e., no light-exposure conditions and is distinguished from the conventional photocatalyst in this respect. For example, the activating structure of the present invention may be accommodated within a light-impermeable housing to make up an apparatus for activating a substance to be treated.

The term " position where a wave motion energy inherent to each of the elements or the carbon fluoride is amplified " intended herein is the position experimentally found as described in the section of "BEST MODES FOR CARRYING OUT THE INVENTION", and is intended to a position which imparts an energy to a substance by the vibration, fluctuation or such inherent to each element etc. at the time of passing the substance through or staying the substance in the gap or space among the particles composed of the specific element or carbon fluoride.

Furthermore, the term "activation", "activating" or "to activate" intended herein means that an energy is imparted to a substance due to the passing the substance through or staying in the substance in the energy focused place . Consequently, these terms the activation or such intended herein encompasses that the substance to which an energy has been imparted is "decomposed".

Also, the term "activation", "activating" or "to activate" intended herein encompasses that an energy is imparted to a prescribed molecule, which is a substance to be treated, to cleave the molecular bonds, or to cleave an intermolecular bond, for example, hydrogen bond.

The degree of the activation can be adjusted by a process of arranging the energy focused place , specifically, selecting the distance among the prescribed particles, packing density of the particles, the element making up the particles or such.

In the activating structure of the present invention, the particles are arranged at the apices of a tetrahedron, preferably regular tetrahedron, or the apices of a triangle, preferably regular triangle.

The arrangement of the particles making up the activating structure according to the present invention at the apices of a triangle, preferably regular triangle is one of the positions amplifying a wave-motive energy inherent to the an element selected from the group consisting of silicon, titanium, nickel, and samarium or inherent to a carbon fluoride to carbon fluoride, and is an arrangement, which makes it easy to arrange the particles. In this embodiment, it is ideal that the particles each having substantially the same particle size are brought into contact with each other to arrange the particles at the apices of a regular triangle, but the present invention is not restricted to such an arrangement as long as the arrangement makes it possible to amplify an wave-motive energy inherent to each element or to a carbon fluoride, even if part of the particles are not brought into contact with each other. Specifically, the arrangement of the prescribed particles at the apices of a tetrahedron is not restricted to the contact or non-contact of each particles.

The arrangement of the particles making up the activating substance of the present invention at the apices of a tetrahedron (particularly regular tetrahedron), i.e., the arrangement of the particles making up the activating substance of the present invention at the apices of a triangle (particularly regular triangle) in the most effective manner, to make up the activating structure of the present invention, is one of the positions amplifying a wave-motive energy inherent to the an element selected from the group consisting of silicon, titanium, nickel, and samarium or inherent to a carbon fluoride to carbon fluoride, and is an arrangement, which makes it easy to arrange the particles.

According to one embodiment of the activating structure of the present invention, the particles are in a globular form, and the particles are laminated in a plate state.

When the particles are in a globular form, the particles can easily be arranged in a position for amplifying an wave motive energy.

In the activating structure of the present invention where the particles are in a globular form, and the particles are laminated in a plate state, a ratio of the length to breadth of the particle is preferably not less than 0.3, and particularly from 0.8 to 1.

By such a configuration as described above, the energy focused place in the activating structure of the present invention can be secularly placed. Conversely, if needle-like particles having the ratio of less than 0.3, the energy focused place cannot be placed among the particles in a sufficient manner.

In a preferred embodiment of the activating structure of the present invention, the particle size is preferably from 5 to 80 microns. More preferably, the particle sizes of the particles are well-watched.

The particles are preferably produced by a gas atomizing method.

The gas atomizing method is one of the most common processes for producing a catalyst, and this method is applicable to produce the particles of the present invention.

Instead of the gas atomizing method, the particles of the present invention may also be produced by a jet-pulverization method.

The jet pulverization method is also one of the most common processes for producing a catalyst, and is applicable to produce the particles of the present invention.

In an embodiment of the activating structure of the present invention, the particles are formed into a plate (hereinafter this structure is referred to as a "plate form activating structure").

The plate form activating structure referred herein means an activating structure having a prescribed thickness, a prescribed width, and a prescribed length, and is distinguished from an activating structure of the present invention in which the particles themselves are arranged in a prescribed position (hereinafter sometimes referred to as "a particle-form activating structure").

The plate-form activating structure of the present invention having such a configuration can effectively used in an apparatus for activating a substance. Specifically, the shape possessed by the plate-form activating structure of the present invention makes it easy to design an apparatus for activating a substance.

In the activating structure of the present invention, the activating structure formed in a plate has a porosity of from 45 to 60%, and more preferably approximately 50%.

In the case of having such a porosity, a substance to be treated can easily enter (be passed through or stay) in the energy focused place in the activating structure of the present invention, and the structure is not undergone any damage due to pressure loss or such at the time of passing the substance through the plate-form activating structure.

The plate-form activating structure of the present invention may possess a cross-sectional shape such as an I-shape, an L-shape, a U-shape, or an M-shape.

As described above, the plate-form activating structure of the present invention may possess a various cross-sectional shape depending upon an intended application.

The activating structure may be formed into a star-form; a disc form; a plate form having at least one pore, globular form, an oval rotor (an oval solid of revolution), a gourd form or a honeycomb shape. The activating structure of the present invention may be formed by sintering the particles.

As described above, the activating structure of the present invention may be formed into a wide variety of shapes in addition to the plate-form, and thus, is applicable to a design for an apparatus for activating a substance depending upon various objects and applications.

The formation of the activating structure of the present invention into a star-form; a disc form, a plate form having at least one pore, a globular form, an oval rotor, or a gourd form or a honeycomb shape is one of the most common method for increasing the surface area of the activating structure of the present invention, and such a configuration is known in the catalyst field. Consequently, the activating structure of the present invention can be handled resembling a catalyst having a similar form.

Hereinafter, the activating structure having a form similar to that of a catalyst is sometimes referred to as "activating construction" in order to be distinguished form the activating structure in a particle form, and a particle-form activating construction is sometimes referred to as "particle form activating construction".

In a specific embodiment of the present invention, the activating structures having been formed into a globular form may be arranged in the position where an energy inherent to the element or carbon fluoride making up the activating structure.

Specifically, it has been discovered that when the activating constructions having been formed into a globular form according to the present invention may be arranged at the apices of a (regular) triangle, there arises an energy focused place possessed by the activating constructions in a gap between the activating constructions, and when a substance to be treated is passed through or stayed in the energy focused place, the substance may be activated (see Examples 25-28).

Such a configuration as described above makes it possible to allow a substance to be treated for being passed through or stayed in a much wider gap.

It is noted that an energy of the energy focused place according to such a specific embodiment is weak in comparison with the energy focused place within the interior of the particles.

In the activating structure of the present invention, the activating structure may be used for librating hydrogen from water, hydrogen peroxide, an aqueous medium, a hydrocarbon or a mixture thereof, and recovering the librated hydrogen.

Specifically, a substance to be treated possessing O-H or C-H bonds such as water (H-O-H), hydrogen peroxide (H-O-O-H), or a hydrocarbon (C-H) may be passed through or stayed in the energy focused place of the activating structure of the present invention to cleave the O-H or C-H bond whereby hydrogen molecule ($H_2$) may be librated.

The term "aqueous medium" to be used herein means to encompass aqueous solutions containing a component or components soluble or miscible in water such as electrolytes including sodium chloride, polar solvents such as lower alcohols, saccharines including cane sugar, and any other components, emulsions, suspensions and the like.

Particularly, when water or an aqueous medium is selected as the subject substance, it is activated by the activating structure of the present invention to obtain a mixed gas comprising hydrogen, oxygen and nitrogen. The separation of hydrogen form the resulting mixed gas by appropriate means gives a mixed gas comprising oxygen and nitrogen. Consequently, by treating water or an aqueous medium with the activating structure of the present invention, air can be produced (for example, a mixed gas having 5 volume% of oxygen and 17 volume% of nitrogen could be obtained in Example 1).

The term "hydrocarbon" used herein means a hydrocarbon from which hydrogen can be librated utilizing the activating structure of the present invention, and is intended to include saturated or unsaturated aliphatic hydrocarbons, which can liberate hydrogen; aliphatic alcohols, which can liberate hydrogen, such as methanol and ethanol; aliphatic aldehydes, which can liberate hydrogen; aliphatic ketons, which can liberate hydrogen; gasoline, and petroleum ethers.

A very strong attention has been paid to hydrogen as a fuel substituted by the existing energy represented by fossil fuel. The activating structure of the present invention can be used to liberate hydrogen from water and a hydrocarbon, whereby hydrogen can be selectively produced with no (or little) application of any external energy and with no (or little) production of any byproducts.

The present invention is also directed to an apparatus for activating a substance which comprises the activating structure (including the activating structure in the particle form or formed activating structure) as a reactant, and which activates a substance to be treated by passing it through or staying it in the energy focused place of the activating structure.

By constituting the apparatus as described above, various substances can be activated in a simple configuration.

In an embodiment of the apparatus for activating a substance according to the present invention where the particle form activating structure or activating construction is used as a reactant, the substance is passed through or stayed in the energy focused place of the activating structure, to thereby activate the substance, the activating structure may be placed in a fixed bed manner or a fluidized bed manner.

Similar to the catalyst or such, the activating structure can exhibit an effect for activating a substance either in a fixed bed manner or a fluidized bed manner. Consequently, an apparatus for activating various type of substance to be treated can be produced in a manner similar to the conventional manner like those utilizing the catalyst.

The present invention is also directed to an apparatus for activating a substance comprising activation portions made up of the activating construction in which the activation portions are provided so as to have a gap between the activation portions.

When the apparatus is configured as described above, a substance to be treated can be passed through or stayed in the gap between the activation portions to, thereby activate the substance. In addition, since a wide gap can be provided as the energy focused place in comparison with the gap among the particles, an apparatus can be designed in with increased freedom.

The phrase " activation portions are provided so as to have a gap between the activation portions made up of the activating construction" as used herein means that the activating portion of the present invention is provided in a donut state through which a substance to be treated is passed or in which the substance is stayed; the activating portion each formed into a globular form are placed at the apices of a regular tetrahedron, through which a substance to be treated is passed or in which the substance is stayed; or activating portions made of the activating structure of the present invention are placed at the apices of a (regular) triangle, through which a substance to be treated is passed or in which the substance is stayed.

In this embodiment, it is preferred that the activating constructions are formed into globular forms and are placed at the apices of a tetrahedron or the apices of a triangle as in a particle form activating structure, due to the same reason as that of the particle form activating structure.

In a specific embodiment of the present invention, there is provided an apparatus for activating a substance, which comprises the activating structure of the present invention (including the particle form activating material and activating construction) as a reactant, and which activates a substance to be treated by passing it through or staying it in the energy focused place of the activating structure to generate a gas.

By passing a substance to be treated having an OH group, a C-H group or such through or staying such a substance in the activating structure of the present invention, the activating structure of the present invention can generate a gas with application of no energy or minimized amount of energy, and thus, the apparatus can be effectively utilized as a compact type gas generator.

The gas generator of the present invention may be composed of a container for a treatment for filling up with the activating structure of the present invention, which activates a substance to be treated to generate a gas; and

at least one plate form activating structure provided within said container for a treatment in a direction such that the generated gas is floated upwardly.

Such a configuration generates convection of the substance to be treated in the cross-sectional lengthwise direction of the plate form activating structure. Such convection as described above increases the possibility that the substance to be treated is passed through the energy focused place in the plate form activating structure. Consequently, the substance to be treated can effectively be activated.

The term "the direction such that the generated gas is floated upwardly" intended herein means a direction towards the vertical direction relative to the container, and is not restricted as long as the convection of the substrate is generated towards the cross-sectional lengthwise direction of the plate form activating structure. Also, it is not restricted to the shape of the plate form activating structure, the direction of the side of the plate form activating structure, and the position of the plate form activating structure to be arranged.

Specifically, the activating structure (the plate form activating structure), may be formed into a circular, oval or rectangular shape in the plane direction, with the rectangular shape being preferred. For example, if the activating structure has a rectangular or oval shape, the long side (long axis) is preferably placed in the vertical direction relative to the container.

The plate form activating construction may be placed in contact with the bottom surface or side surface of the container, or may be placed not in contact with the bottom surface of side surface, via holding means.

The gas generator according to the present invention may be composed of a container for a treatment for filling up with the activating structure of the present invention, which activates a substance to be treated to generate a gas; and

a plate form activating structure provided within said container for a treatment so as to divide the container in the vertical direction.

When the apparatus is configured as described above, since the substance to be treated is passed through the interior of the plate form activating structure, i.e., it is passed through the energy focused place of the plate form activating structure, the substance can be effectively activated to generate a gas.

The phrase "a plate form activating structure provided within said container for a treatment so as to divide the container in the vertical direction" intended herein means that the container may be divided in the vertical direction by one plate form activating structure or the container may be divided in the vertical direction by each any one or some of the plate form activating structures.

The gas generator according to the present invention may have a configuration where the plate form activating structure divides the container in the vertical direction in combination with the configuration where at least one plate form activating structure is provided within said container for a treatment in a direction such that the generated gas is floated upwardly.

Such a combination increases the area coming the substance into contact with the plate form activating structure, i.e., the possibility that the substance enters in (is passed through and/or is stayed in) the energy focused place , and accelerates the activation of the substance due to the convection.

The apparatus for activating a substance having a configuration as described above preferably possesses a configuration where a heater for heating the plate form activating structure, the substance to be treated, or both is provided to thereby forcibly bring about the convection of the substance. Such a configuration makes it possible to control the convection of the substance and thus, to adjust the activating rate of the substance.

In the apparatus for activating a substance having a configuration as described above, instead of or in addition to the configuration where the heater is provided, a circulator for circulating the substance within the apparatus for activating a substance. Such a configuration also makes it possible to control the convection of the substance and thus, to adjust the activating rate of the substance.

Furthermore, in the apparatus for activating a substance having a configuration as described above, a movement mechanism, which relatively moves the area of said activating structure in contact with the substance in the vertical direction, is preferably provided.

Such a configuration makes it possible to freely change the area of the plate form activating structure in contact with the substance and, thus, to appropriately control the stopping of the activation and the activation rate.

Examples of preferred movement mechanism include, but are not restricted to, vertical movement means, which moves the plate form, and a sub-tank provided on the body the apparatus for activating a substance, which has movement means such as a circulation pump. Also, suspending means which can change the vertical position of the plate form activating structure can be mentioned,

In the embodiment of the apparatus for activating a substance or the gas generator according to the present invention, where the particle form activating structure or the particle form activating construction is used as the reactant, and where the substance to be treated is passed through or stayed in the energy focused place of the activating structure to activate the substance, the apparatus for activating a substance preferably possesses means for generating turbulent flow, whereby due to the turbulent flow generated through the means for generating turbulent flow, the opportunity to pass the substance through the energy focused place of the activating structure is preferably increased.

Such a combination increases the area coming the substance into contact with the plate form activating structure, i.e., the possibility that the substance enters in (is passed through and/or is stayed in) the energy focused place , and thus, can make it possible to effectively activate the substance.

In the gas generator according to the present invention, a separator, which separates and recovers a desired gas from the generated gas is provided, examples of the separator including a separator, which separates a gas due to the difference in the gravity of the components making up the gas, a gas separator composed of an absorbent or a layer of an absorbent which absorbs a specific gas, and a gas separator composed of a membrane or such which only allows a specific gas for passing there-through.

Such a configuration makes it possible to separate and recover a desired gas from the generated gas.

In a specific embodiment of the present invention, water, hydrogen peroxide, an aqueous medium (for example, an aqueous electrolyte solution such as saline), a hydrocarbon (for example, an alcohol such as methanol and gasoline) , or a mixture thereof is passed through or stayed in the energy focused place of the activating structure to liberate and recover hydrogen.

Such a configuration makes it possible to provide an apparatus for producing hydrogen from water, hydrogen peroxide, an aqueous medium, a hydrocarbon or a mixture thereof by a significantly simple configuration even if no apparatus for treating a byproduct. Particularly, when water or an aqueous medium is used as the subject substance, activated water such as in the case of the electrolyzed water (alkaline ion water or strongly acidic water) or magnetized water can be obtained, and can effectively be used in various fields. Consequently, an apparatus for activating water or an aqueous medium with no or little application of an external energy such as electric power can be provided.

The gas generator which generates hydrogen can also be used in a hydrogen generation system in an effective manner. Specifically, it is effectively applicable to various power supplying apparatus (engines including internal combustion engine and external combustion engine), particularly a vehicle engine.

In another embodiment of the gas generator of the present invention, the substance to be treated is water, hydrogen peroxide, aqueous medium or a mixture thereof, and is passed through or stayed in the energy focused place of the activating structure to generate a mixed gas comprising hydrogen, oxygen and nitrogen.

Although the reason why nitrogen is generated has not yet been known, as a result of repeated experiments of activating a substance to be treated such as water, hydrogen peroxide and an aqueous medium utilizing the apparatus for activating a substance according to the present invention, it has been proven that a mixed gas comprising oxygen and nitrogen is generated in addition to the generation of hydrogen (see the following Example 1). What is more, a volume ratio of oxygen and nitrogen is approximately 5;17, which resembles the composition of air. Consequently, the apparatus for activating a substance according to the present invention can produce air from such a substance without application of energy or with application of only a little amount of energy.

According to another embodiment of the present invention, there is provided a process for activating a substance, which comprises passing a substance to be treated through or staying a substance to be treated in the energy focused place of the activating structure of the present invention to activate the substance.

According to the process for activating a substance, an energy can be applied to the substance to be treated without application of any external energy in a significantly simple method by the energy focused place of the activating structure of the present invention to activate the substance.

For example, the activating structure of the present invention can activate liquid fuel to thereby decrease the total hydrocarbon amount thereof and to thereby enhance a fuel ratio.

Also, the activating structure of the present invention can decompose ethylene generated from vegetables or fruits and, thus, can effectively utilized as an agent for maintaining the freshness of a vegetable and fruit.

Furthermore, the activating structure of the present invention can decompose harmful gases such as carbon dioxide, nitrogen oxides, and smoke of cigarette, and thus, it can be effectively used in the apparatus for removing these substances.

In the process for activating a substance according to the present invention, water, hydrogen peroxide, an aqueous medium (for example, an aqueous electrolyte solution such as saline) , a hydrocarbon (for example, an alcohol such as methanol and gasoline) , or a mixture thereof is passed through or stayed in the energy focused place of the activating structure to liberate and recover hydrogen.

Such a configuration makes it possible to provide an apparatus for producing hydrogen from water, hydrogen peroxide, an aqueous medium, a hydrocarbon or a mixture thereof by a significantly simple configuration even if no apparatus for treating a byproduct is provided. Particularly, when water or an aqueous medium is used as the subject substance, activated water such as in the case of the electrolyzed water (alkaline ion water or strongly acidic water) or magnetized water can be obtained, and can effectively be used in various fields. Consequently, an apparatus for activating water or an aqueous medium with no or little application of an external energy such as electric power can be provided.

According to another embodiment of the present invention, there is provided a process for producing an activating structure, which comprises:

(a) forming particles consisting essentially of a single element selected from the group consisting of silicon, titanium, nickel, and samarium, or of a carbon fluoride;

(b) subjecting the particles obtained in the stage (1) to an antistatic treatment; and

(c) placing the particles having been subjected to the antistatic treatment in the stage (2) in the position where a wave motive energy is amplified, followed by sintering.

In such a configuration, the activating structure of the present invention can be produced with ease and good reproductivity.

BRIEF DESCRIPTION OF THE DRAWINGS

FIG. 1 is a drawing showing an example of the arrangement of the activating structure of the present invention, wherein FIG. 1 (a) totally shows one example of the activating structure of the present invention, FIG. 1 ( b) shows one example of a basic configuration of the activating structure of the present invention shown in FIG. 1 (a), and FIG. 1 (c) is a perspective view showing another example of the activating structure of the present invention.

FIG. 2 (a) and FIG. 2 (b) are electronic microscopic photograph showing the shape of the particle making up the activating structure of the present invention and the shape of the comparative particle, respectively.

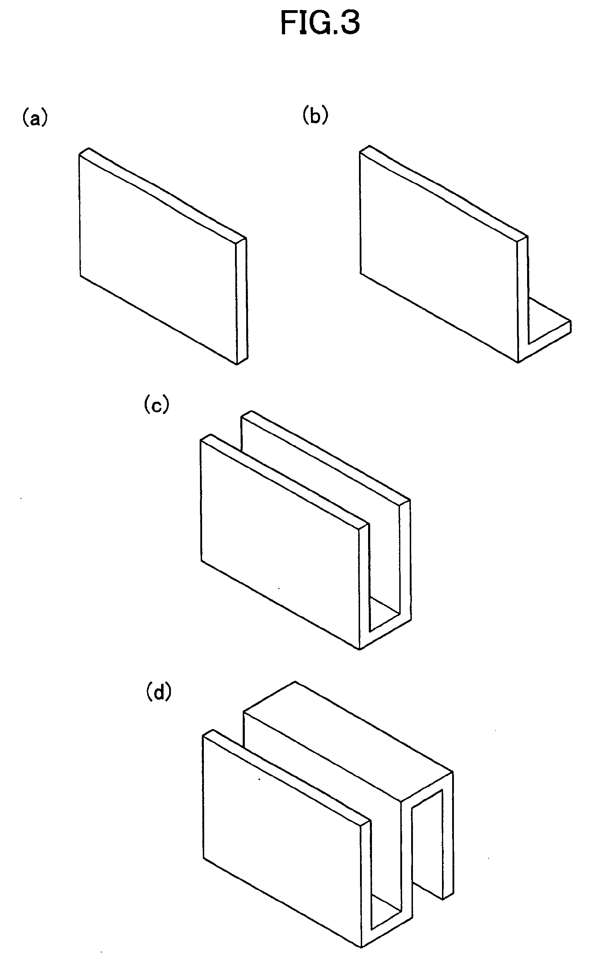

FIG. 3 is a drawing showing one example of preferred embodiments of the activating structure according to the present invention, where FIG. 3 (a) is a perspective view showing the configuration before the activating structure of the present invention is formed into an I-shape; FIG. 3 (b) is a perspective view showing the configuration where the activating structure of the present invention is formed into an L-shape; FIG. 3 (c) is a perspective view showing the configuration where the activating structure of the present invention is formed into a U-shape; and FIG. 3 (d) is a perspective view showing the configuration where the activating structure of the present invention is formed into an S-shape.

FIG. 4 (a) to FIG. 4 (c) each is an electro-microscopic photograph each showing the shape of the particles making up the activating structure of the present invention and the shape of the comparative particles.

FIG. 5 (a) to FIG. 5 (f) are perspective views each showing one example of another shape of the activating structure according to the present invention.

FIG. 6 (a) to FIG. 6 (f) are cross-sectional views showing the cross-sectional shapes of the activating structure shown in FIG. 5 (a) to FIG. 5 (f) where a core is provided, respectively.

FIG. 7 is a cross-sectional view showing one example of the apparatus for activating a substance with which the activating structures of the present invention are filled (in a fluidized bed manner).

FIG. 8 is a cross-sectional view showing one example of the apparatus for activating a substance (gas generator) utilizing the activating structures of the present invention.

FIG. 9 is a cross-sectional view showing one example of the apparatus for activating a substance (gas generator) utilizing the plate form activating structures of the present invention.

FIG. 10 (a) and FIG. 10(b) are cross-sectional views each showing one example of the apparatus for activating a substance (gas generator) utilizing the plate form activating structures of the present invention.

FIG. 11 is a cross-sectional view showing one example of the apparatus for activating a substance (gas generator) utilizing the plate form activating structures of the present invention.

FIG. 12 is a cross-sectional view showing one example of the apparatus for activating a substance (gas generator) utilizing the plate form activating structures of the present invention.

FIG. 13 (a) and FIG. 13 (b) are cross-sectional views each showing one example of the apparatus for activating a substance (gas generator) utilizing the plate form activating structures of the present invention.

FIG. 14 is a cross-sectional view showing one example of the apparatus for activating a substance (gas generator) utilizing the plate form activating structures of the present invention.

FIG. 15 is a perspective view showing one example where the plate form activating structures of the present invention are directly heated.

FIG. 16 is a perspective view showing another example where the plate form activating structures of the present invention are directly heated.

FIG. 17 (a) to FIG. 17 (d) are drawings showing still another embodiment of the apparatus for activating a substance according to the present invention, where FIG. 17 (a) is a cross-sectional view of the apparatus for activating a substance according to the present invention, FIG. 17 (b) to FIG. 17 (d) are schematic views each showing an example of filling with the activating structures in the apparatus in FIG. 17 (a).

Fig. 18 is a schematic view showing one example of the hydrogen generating system comprising the apparatus for activating a substance according to the present invention.

FIG. 19 is a perspective view showing an example of the apparatus for activating a substance according to the present invention used for finely dividing clusters of water.

FIG. 20 outlines an experiment of decomposing water in the present invention.

FIG. 21 (a) to FIG. 21 (c) are ultraviolet ray spectra showing the results of the activation of water utilizing the apparatus for activating a substance shown in FIG. 19, where FIG. 21 (a) shows a UV spectrum of water before the activation, FIG. 21 (b) shows a UV spectrum of water after the activation utilizing the apparatus for activating a substance shown in FIG. 19, and FIG. 21 (c) shows a UV spectra showing before and after the activation,

FIG. 22 is a cross-sectional view showing the conventional apparatus for producing electrolyzed water, where FIG. 22 (a) is a schematic view showing the apparatus for electrolyzing water, FIG. 22 (b) is a schematic view showing one example of the apparatus for producing alkaline ion water; and FIG. 22 (c) is a schematic view showing one example of the apparatus for producing strongly acidic water.

FIG. 23 is cross-sectional view schematically showing the conventional apparatus for treating water with magnet.

BEST MODES FOR CARRYING OUT THE INVENTION

The present invention will now be described by referring to the attached drawings.

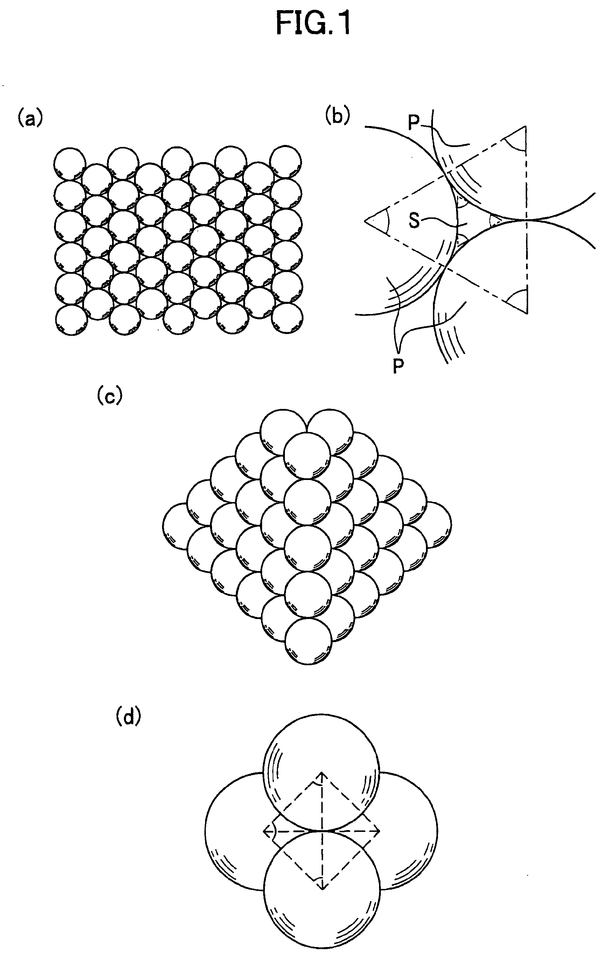

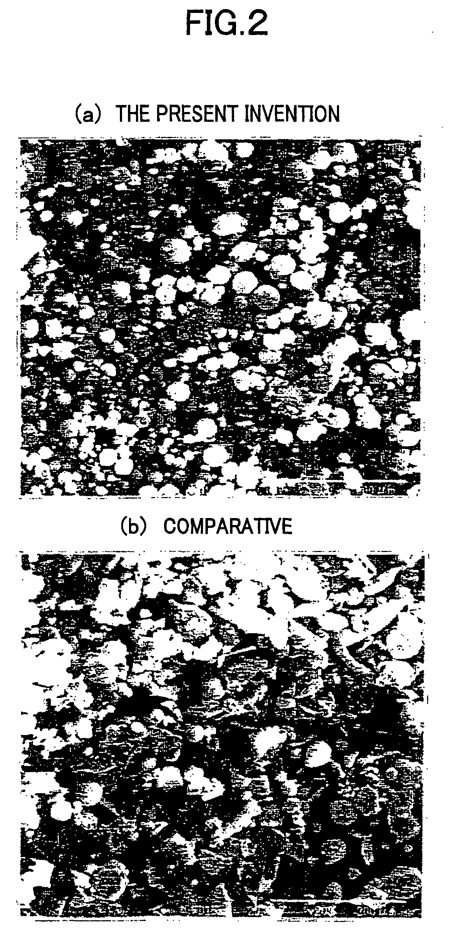

First, a basic configuration of the activating structure of the present invention by referring to FIG. 1 and FIG. 2.

(Activating Structure)

FIG. 1 is a drawing showing an example of the arrangement of the activating structure of the present invention, wherein FIG. 1 (a) totally shows one example of the activating structure of the present invention, FIG. 1 (b) shows one example of a basic configuration of the activating structure of the present invention shown in FIG. 1 (a), and FIG. 1 (c) is a perspective view showing another example of the activating structure of the present invention. FIG. 2 (a) and FIG. 2 (b) are electronic microscopic photograph showing the shape of the particle making up the activating structure of the present invention and the shape of the comparative particle, respectively.

(Constituting Elements)

The activating structure of the present invention is composed of a single element selected from among silicon, titanium, nickel, and samarium. The selection of these elements is derived from the results of repeated experiments by the inventor concerned, which will be described later on. Amongst elements, titanium and nickel are metal elements whose the number of electrons revolting around the outermost core orbit (M, N) is two, and are elements which are difficult to be oxidized. Samarium is a rare earth element whose the number of electrons revolting around the outermost core orbit (M, N) is two, and is an element which is difficult to be oxidized. Also, nickel and samarium are characterized by possessing strongly magnetic force.

In the activating structure according to present invention, one of these elements is used singly, the purity thereof is suitably selected depending upon the kinds of the elements used and the kinds of the substances to be activated. For example, in the case where silicon is used as the activating structure of the present invention to activate water, in order to generate hydrogen and oxygen, the purity of silicon is not less than approximately 90%, and preferably not less than 95%. Higher the purity is preferable much more. With regard to the elements which can constitute the activating structure of the present invention other than silicon, i.e., titanium, nickel, and samarium, they preferably have purities similar to that of silicon. Generally, the activating structure of the present invention is composed of a single element such as silicon, but the activating structure of the present invention may be composed of the combination thereof.

In the activating structure of the present invention, these elements are granulated to be used as granules. From the viewpoint of easy granulation, the elements are preferably granulated into globular granules, particularly truly granular granules, particles or grains. In this case, the preference is given to use the particles having a particle size of from 5 microns to 80 microns. The particles having a particle size less than 5 microns are relatively difficult to be produced, and when they are arranged in a prescribed positions, it becomes relatively difficult to pass a substance to be treated through a space (a gap) among the particles, which is an energy focused place , which will be described fully later on. Conversely, if the particle size exceeds 80 microns, an energy sufficient for activating a substance cannot be generated among the particles, when the particles are arranged in the prescribed position. Generally speaking, when the particle size exceeds 150 microns, an energy for activating a substance according to the present invention can be generated only with difficulty.

The particle distribution is preferred as narrow as possible. Specifically, as a result of repeated experiments by the present inventor, it has been proven that a significant effect can be obtained, when the variation in the particle size is within ±15 microns (i.e., an margin of error of the particle size is within 30 microns).

A method for granulating the element specific in the present invention into such a shape is not particularly restricted, and any of the granulation methods generally known in the catalyst field can be applied. From the viewpoints of the simple production, convenience in the production, and the possibility that the shape of the particles can become relatively uniform, the application of a gas atomizing method is preferred. However, the activating structure of the present invention is not specifically restricted to the particles formed in the gas atomizing method as long as the particles mentioned above can be obtained, examples of the granulation methods including the conventional methods such as a sol-gel method, and a jet-milling method.

As shown in FIG. 1, in the present invention, particles P composed of an element selected from silicon, titanium, nickel, and samarium as described above are arranged in the position where a wave motive energy is amplified.

Specifically, each element making up the activating structure of the present invention has an inherent frequency represented by the formula: $E = h\nu$ (where, E is an ionized energy (eV) inherent to each element, h is Planck constant, and $\nu$ is a frequency) , for example, at the time of the ionization, and these elements which can constitute the activating structure of the present invention oscillate vibrations originated from electromagnetic fields. The vibrations originated from electromagnetic fields possesses prescribed fluctuations. It can be deduced from such a fact that each of the elements making up the activating structure of the present invention has an inherent vibration even at a normal state, and that by arranging the particles P in the position where the vibration inherent to each element is effectively obtained, the vibration energy is imparted to a substance being passed through or stayed in a space S formed among the particles, to activate the substance.

Table 1

| Element | Ionized Energy (eV) | Frequency (x$10^{15}$ Hz) |
|---|---|---|
| Si | 8.144 | 1.971 |
| Ni | 7.63 | 1.846 |
| Ti | 6.82 | 1.649 |
| Sm | 5.63 | 1.361 |

Also, although the reason why similar functions and effects are exhibited has not yet been known, as a result of repeated experiments by the present inventor, it has discovered that carbon fluoride (FC) also exhibits functions and effects similar to those of the metal elements just mentioned. Consequently, the activating structure according to the present invention should include the particles composed of carbon fluoride.

The present invention has been made based upon such a deduction and has been evidenced by the repeated experiments and, it has been discovered that assuming that the particles have substantially the same size (truly globular particle having the same particle diameter), for example, they are arranged at the apices of a triangle, preferably the apices of a regular triangle as shown in FIG. 1 (b). Specifically, during the course that a substance is passed through or stayed in a space S (energy focused place ) among the particles P composed of the specific element, a high energy is imparted to the substance through the vibration and fluctuation inherent to the element making up the activating structure of the present invention.

In the present invention, the particles composed of the specific element are arranged in the specific position as described above. In practice, since the particles are not necessarily true globe and since the particle size of each particle is not always constant, it is difficult to arrange the particles at the apices of a regular triangle in a precise manner. The phrase "the particles are arranged at the apices of a triangle" used herein includes such an error range, and means to include the arrangement, for example, that the particles are arranged in the position as shown in FIG. 2(b). It is noted that FIG. 2 (a) shows that particles P produced by the gas atomizing method are sieved by a 52 micronsieve, and the particles (particles having a uniform size) passing through the sieve are collected and arranged.

As shown in FIG. 1 (b), in the case where the particles are arranged at the apices of a regular triangle, the triangle formed in the space S among the particles P, i.e., apices each formed by the crossing point of the tangent lines of the particles, is required to have an angle of not more than 90 degree, preferably from 39 to 70.5 degree, and ideally approximately 60 degree.

It has also been discovered that the highest activity can be exhibited if the particles are arranged at the apices of a regular tetrahedron as shown in FIG. 1 (d) . Specifically, the tetrahedron configuration can be assumed to be a configuration where the four (regular) triangle configurations are placed, the triangle configuration being the configuration, where during the course that a substance is passed through or stayed in a space S (energy focused place ) among the particles P composed of the specific element, a high energy is imparted to the substance through the vibration and fluctuation inherent to the element making up the activating structure of the present invention. In this case, much higher energy-focused portion is constituted. Similar to the arrangement of the (regular) triangle, in the present invention, the particles composed of the specific element are arranged in the specific position as described above. In practice, since the particles are not necessarily true globe and since the particle size of each particle is not always constant, it is difficult to arrange the particles at the apices of a regular tetrahedron in a precise manner. The phrase "the particles are arranged at the apices of a regular tetrahedron " used herein includes such an error range, and means to include the arrangement, for example, that the particles are arranged in the position as shown in FIG. 2 (b). It is noted that FIG. 2 (a) shows that particles P produced by the gas atomizing method are sieved by a 52 micron-sieve, and the particles (particles having a uniform size) passing through the sieve are collected and arranged.

Similar to the case of the embodiment where the particles are arranged at the apices of a (regular) triangle, in the case of each (regular) triangle making up the (regular) tetrahedron, the triangle formed in the space S among the particles P, i.e., apices each formed by the crossing point of the tangent lines of the particles, is required to have an angle of not more than 90 degree, preferably from 39 to 70.5 degree, and ideally approximately 60 degree.

The position where the wave motive energy is amplified is not specifically restricted to the position of the apices of the regular tetrahedron, as long as it is the position where during the course that a substance is passed through or stayed in a space S (energy focused place ) among the particles P composed of the specific element, a high energy can be imparted to the substance through the vibration and fluctuation inherent to the element making up the activating structure of the present invention. Specifically, for example, as shown in FIG. 2 (b), if the particles each having an irregular shape are arranged at random, the vibrations inherent to each element are denied with each other, making it difficult to generate a high energy at the space existing among the particles, and in turn, not leading to the activation of a substance. It is noted that the particles shown in FIG. 2 (b) are produced by pulverizing the raw substance adhered on the gas atomizing chamber followed by sieving with a 52 micron-sieve, and the particles (particles having a uniform size) passing through the sieve are collected and arranged.

Also, the activating structure of the present invention can activate a substance to be treated even under dark conditions, i.e., no light-exposure conditions and is distinguished from the conventional photocatalyst in this respect. For example, the activating structure of the present invention may be accommodated within a light-impermeable housing to make up an apparatus for activating a substance to be treated.

(Plate Form Activating Structure)

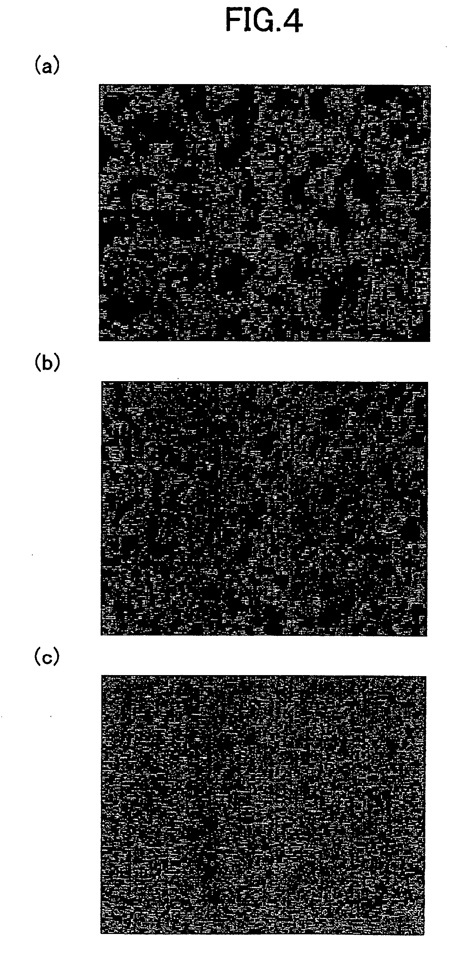

In a preferred embodiment of the present invention, there is provided a plate form activating structure. The plate form activating structure according to the present invention will be described by referring to FIG. 3 and FIG. 4.

FIG. 3 is a drawing showing one example of preferred embodiments of the activating structure according to the present invention, where FIG. 3 (a) is a perspective view showing the configuration before the activating structure of the present invention is formed into an I-shape; FIG. 3 (b) is a perspective view showing the configuration where the activating structure of the present invention is formed into an L-shape; FIG. 3 (c) is a perspective view showing the configuration where the activating structure of the present invention is formed into a U-shape; and FIG. 3 (d) is a perspective view showing the configuration where the activating structure of the present invention is formed into an S-shape. FIG. 4 (a) to FIG. 4(c) each is an electro-microscopic photograph each showing the shape of the particles making up the activating structure of the present invention and the shape of the comparative particles.

(Configuration of Plate Form Activating Structure)

The activating structure of the present invention may be produced by molding the particles described above by any of various molding methods such as compression molding, and sintering. Specifically, first, as shown in FIG. 1, particles P composed of a single element selected from the group consisting of silicon, titanium, nickel, and samarium or of a carbon fluoride are placed in a position where a wave motive energy inherent to the element or carbon fluoride making up the particle is amplified, typically so that the particles P are positioned at the apices of a regular triangle, preferably the apices of a regular tetrahedron. Subsequently, the particles P thus arranged are heated, for example, at a temperature lower than the melting point of the element or carbon fluoride making up the particles P, and the compressed. This can produce a plate form activating structure according to the present invention as shown in FIG. 3 (b).

Also, depending upon the configuration of an apparatus for activating a substance composed of the plate form activating structure, which will be described later on, the activating structure may be formed into an L-shape as shown in FIG. 3 (b), a U-shape as shown in FIG. 3 (c), or an S-shape as shown in FIG. 3 (d). The shape of the plate-form activating structure intended herein is not restricted as long as it has a prescribed thickness, length and width. Also, the term "L-shape, "U-shape", and "S-shape" used herein are not intended that the plate form activating structure of the present should have "L-shape, "U-shape", and "S-shape" in a strict manner. For example, "U-shape" may have an angle, i.e., Japanese Letter "コ".

As shown in FIG. 4(a), the plate form activating structure of the present invention as described above a plurality of spaces S serving as energy focused place s are formed among the particles (the description of the preferred embodiment of the space S, which is similar to that described above, will be omitted). Specifically, similar activating effects to those described above can be exhibited by placing the particles P a position where a wave motive energy inherent to the element or carbon fluoride making up the particle is amplified.

In contrast, if the particles are placed in a position deviating from the definition of the present invention, i.e., placed at random, as shown in FIG. 4 (b) and FIG. 4 (c). even if spaces or gaps are provided among the particles, the activating effects possessed by the activating structure of the present invention cannot be exhibited.

The plate form activating structure of the present invention may have any sizes depending upon the intended application. For the purpose of effectively directing a substance to be treated toward the energy focused place as defined in the present invention (residence or passing of the substance to be treated) , the thickness is generally from 350 microns to 1500 microns, and preferably from 500 microns to 1000 microns (specifically, preference is given to have a thickness such that from 5 to 15 layers of the particles making up the activating structure of the present invention are laminated).

If the thickness is lower than the above range, much attention should be paid in handling the plate form activating structure so as to prevent the activating structure from being broken. Conversely, if the thickness exceeds the above range, the substance to be treated is sometimes directed toward the energy focused place in an insufficient manner.

The plate form activating structure of the present invention preferably possesses a porosity ranging from 45 to 60% as the total structure, and particularly approximately 50%. When the plate form activating structure having a porosity within the above range is used, the substance to be treated can be introduced into the energy focused place in the plate form activating structure at a relatively small flow rate (pressure) of the substance to be treated. If the porosity is lager than the above range, a higher pressure is required to treat the substance, and there is the possibility that the plate form activating structure is broken and the blockage of the energy focused place by impurities will be generated. Conversely, if the porosity of the plate form activating structure is less than the above range, it does not take a sufficient time for passing the substance through or staying the substance in the energy focused place , making it difficult to activate the substance in a sufficient manner. The most preferred porosity of the plate form activating structure is approximately 50%.

(Activating Structure having Other Shapes)

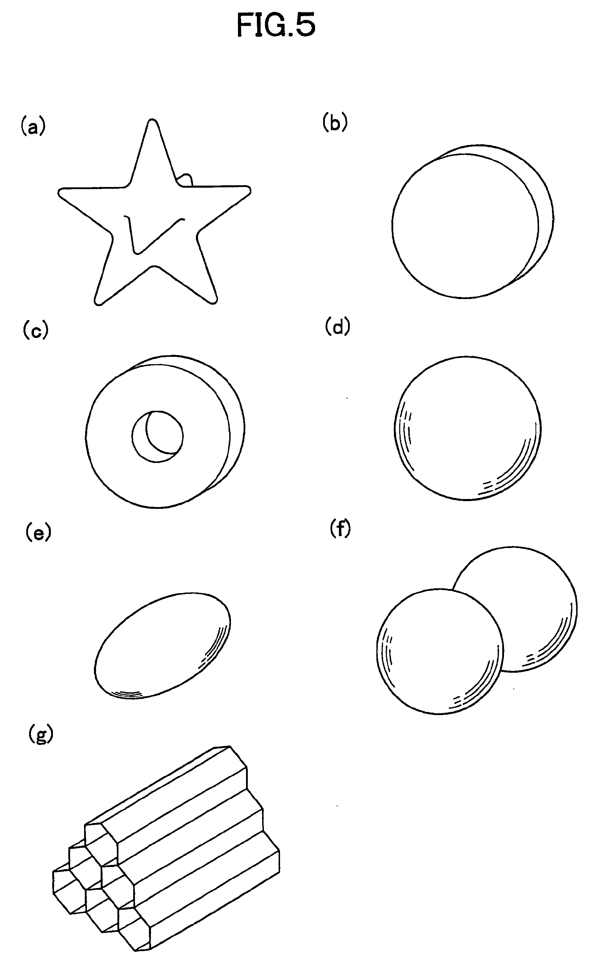

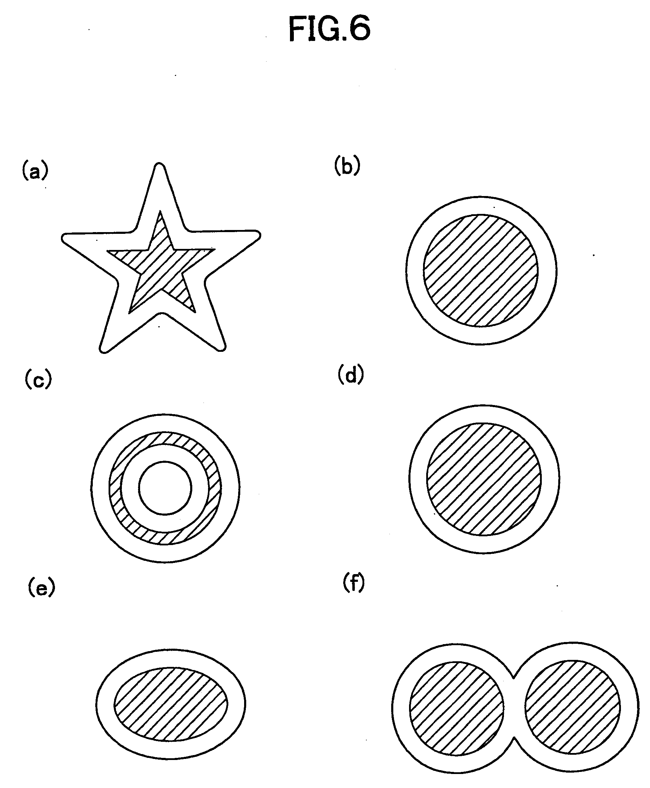

In a preferred embodiment of the present invention, the plate form activating structure of the present invention may be formed into various shapes other than the shapes described above. The plate form activating structure of the present invention will now be described by referring to FIG. 5 and FIG. 6.

FIG. 5 (a) to FIG. 5 (f) are perspective views each showing one example of another shape of the activating structure according to the present invention. FIG. 6 (a) to FIG. 6 (f) are cross-sectional views showing the cross-sectional shapes of the activating structure shown in FIG. 5 (a) to FIG. 5 (f) where a core is provided, respectively.

As shown in FIG. 5, the plate form activating structure of the present invention may be formed into various shapes other than the shapes described above. Specifically, the plate form activating structure of the present invention may have a star form (confetti form) (FIG. 5 (a)), a disc form (FIG. 5 (b)), a plate form having at least one pore (FIG. 5 (c) ) , a globular form (FIG. 5 (d)), an oval solid of revolution (FIG. 5 (e)), a gourd form (FIG. 5 (f) ; a honeycomb shape FIG. 5 (g) ) , or such.

Specifically, the activating structure (activating construction) of the present invention is formed into a shape and size similar to those of the conventional catalyst, whereby it can be handled similar to the conventional catalyst. Also, the conventional reactor utilizing a catalyst can make use of an apparatus for activating a substance utilizing the activating structure of the present invention.

Also, as shown in FIG. 6 (a) to FIG. 6 (f), for example, the activating structures of the present invention each having a configuration as shown in FIG. 5 (a) to FIG. 5 (f) may be formed on a core made of a metal having low reactivity or high specific heat. In some cases, by such formation as described above, the activating structure of the present invention can be produced with a low cost. Alternatively, utilizing such a metal having a high thermal transmission ratio as a core, the heat exchange with the substance can easily be performed.

As a method for coating the activating structure of the present invention onto a core, any of the conventional methods such as a rolling and fluidizing method and a spray drying method is applicable.

(Production of Activating Structure)

Amongst the activating structures of the present invention, a process for producing the plate form activating structure or the activating construction of the present invention will now be described,

(Production of Particles: Stage a)

First, particles composed of the prescribed element or carbon fluoride are formed, which makes up a basic unit of the activating structure of the present invention.

Specifically, globular form particles, particularly truly globular form particles, are formed by any of the method known in the fields of producing a catalyst such as a gas-atomizing method and a sol-gel method.

(Antistatic Treatment: Stage b)

Subsequently, for the purpose of making it easy to arrange the particles, the resulting particles are subjected to an antistatic treatment. Specifically, the formed particles cannot be arranged in a prescribed position due to the adhesion between the particles or repulsion of the particles through static electricity.

For this reason, both a cathion and an anion are applied to the particle to carry out the antistatic treatment.

(Sintering: Stage c)

The particles having been subjected to the antistatic treatment as described above are then placed as shown in FIG. 1 (a), and they are sintered into a prescribed form. As for the sintering conditions at this time, a temperature is not higher than the melting point of the element or carbon fluoride used to constitute the activating structure and within a temperature capable of sintering the particles (for example, from 1200 to 1300°C for the use of silicon) , a sintering period of from 2.5 to 3.5 hours, and a sintering pressure is from 12 to 25 Mpa. It is noted that since carbon fluoride is not desired to carry out the sintering process, the activating structure comprising carbon fluoride may be produced by a CIP (cold stereo press) method.

When the sintering process is carried out as described above, the plate form activating structure of the present invention having an alignment as shown in FIG. 1 (b) and having a shape as shown in FIG. 3 or FIG. 4 (a) can be obtained. Similarly, the activating structure (activating construction) according to the present invention having a shape other than the plate form can also be produced.

The formation of the plat form activating structure or the activating construction of the present invention is characterized by sintering the particles without using any binder unlike the usual sintering method. Specifically, the sintering process of the particles utilizing any of the conventionally known binders makes it difficult to provide spaces S, i.e., this makes it difficult to arrange the energy focused place to produce the plate form activating structure or the activating construction of the present invention, because there is a fear that impurities originated from the binder are adhered to deactivate the particles. Of course, if the particles can be placed as defined in the present invention and if the adhesion of the binder on the surface can be prevented, it is possible to sinter the particles using a binder. Consequently, the present invention is not restricted to the use or not use of a binder. In the case where a binder is used, the sintering temperature is not less than a temperature for decomposing the binder.

(Characteristics of Plate Form Activating Structure and Activating Construction)

The plate form activating structure or the activating construction thus produced, which has the prescribed shape in comparison with the activating structure of the present invention having being formed into a particle state, are advantageous in terms of easy handling and easiness of designing an apparatus.

Subsequently, an activating of a substance and an apparatus for activating a substance utilizing the activating structure of the present invention will now be described.

(Activation of Substance)

(Substance to be Treated)

The term "substance to be treated with the activating structure of the present invention (subjective substance" includes those which are intervened in (passed through or stayed in) the energy focused place in the activating structure of the present invention to be activated. Specifically, the substance to be treated includes those which have a flowability, and which can be passed through the energy focused place in the activating structure of the present invention, such as powders, gases, and liquids. Generally, the substance includes liquids such as water and organic solvents, and gases such as steam and air.

(Production of Hydrogen)

In a preferred embodiment of the present invention, as typical example of the substance to be treated, water, hydrogen peroxide, an aqueous medium, a hydrocarbon, or a mixture thereof can be mentioned, which can passed through the particles making up the activating structure or stayed in the energy focused place of the plate form activating structure or the activating construction of the present invention to generate hydrogen, can be mentioned

In this embodiment, the term "aqueous medium" to be used herein means to encompass aqueous solutions containing a component or components soluble or miscible in water such as electrolytes including sodium chloride, polar solvents such as lower alcohols, saccharines including cane sugar, and any other components, emulsions, suspensions and the like. Also, the hydrocarbon intended herein is not specifically restricted as long as hydrogen can be librated from its C-H bond or its C-OH bond when being passed through the particles, and examples include wide ranges of the hydrocarbons such as aliphatic alcohols such as methanol and ethanol, and hydrocarbon mixtures such as gasoline and petroleum ethers.

(Pretreatment: Removal of Impurities, Heating, etc.)

The liquid substance to be treated as described above may be suitably selected depending upon the intended application. If impurities, which have a possibility to block the energy focused place in the activating structure of the present invention, exist in the liquid substance (for example, impurities such as sands and fine particles contained in seawater, if seawater is used as the subject substance), the subject substance may preferably be passed through the activating structure of the present invention after the impurities have been removed by aggregation, settling or the like. Optionally, the liquid may be heated by a heater and then passed through the activating structure of the present invention.

By intervening water or the hydrocarbon as the subject substance in the energy focused place in the activating structure of the present invention as described above, an energy higher than the bonding energy such as of O-H bonding or C-H bonding can be imparted the subject substance to liberate hydrogen atom (H). The hydrogen atom librated as described above can easily be collected as hydrogen molecule ($H_2$) by a method known <u>per se</u>.

(Activation of Water)

Also, water or an aqueous medium such as an aqueous electrolyte solution may be activated with the activating structure of the present invention. The method for activating water is roughly divided into two methods: (1) a method in which water or the aqueous medium is directly passed through or stayed in the energy focused place in the activating structure of the present invention; and (2) a method in which water or the aqueous medium is passed through or stayed in a gas between or among the activating portions composed of the activating structure of the present invention. The method mentioned under (1) is mainly available for preparing electrolyzed water and for increasing the amount of oxygen dissolved in water. The method mentioned under (2) is available for finely dividing the cluster of water. It is also within the scope of the present invention that the water is activated by the combinations of these methods mentioned under (1) and (2).

Specifically, in the method mentioned under (1), when water or the aqueous medium as the subject substance can be passed through the activating structure, the activated water can availably be utilized as the electrolyzed water (alkaline ion water and strongly acidic water) as having being used in the conventional manner (with regard to the preparation of electrolyzed water, see the column of the apparatus for activating water, which will be described later on). In this case, differing from the use of the conventional apparatus which utilizing a large amount of energy at the time of electrolyzing or magnifying water, according to the water can be activated without using a large amount of energy.

On the other hand, in the method mentioned under (2) , the activating structures of the present invention are placed outside a passage in order to activate water (to excite water) to constitute a gap between the activating portion composed of the activating structures of the present invention. When water or the aqueous medium is passed through the passage, the cluster of water can be finely divided (excitation of water). This method for activating water has a merit that the cluster of water can be finely divided without bringing the water into contact with the activating portion in comparison with the conventional method where a magnetic metal is used to finely divide the cluster of water.

(Activation of Other Substances)

In addition to the production of hydrogen and the activation of water, the activating structure of the present invention is applicable to a wide variety of applications such as decomposition of ethylene, removal of offensive odor like cigarette's smoke, removal of harmful components from exhaust gas such as those exhausted from automobile and flue, changing of tastes of spirits such as wine.

Furthermore, by placing the activating structure of the present invention on a former line of an internal combustion engine utilizing gasoline or diesel oil as fuel, fuel such as gasoline or diesel oil, which is the subject substance, is activated. This can decrease the total hydrocarbon amount and enhance the fuel ratio.

Specifically, according to the experiment by the present inventor, when ethylene gas as a fluid as the subject substance was passed through the activating structure (the energy focused place in the activating structure and the gap among the activating structures), the generation of water was observed. Consequently, it has been proven that the activating structure of the present invention can also be used as any fluid other than liquid.

Particularly, when the activating construction prepared by forming the activating structure of the present invention into a globular form are placed at the apices of a (regular) triangle or (regular) tetrahedron, and a gas such as cigarette' s smoke or ethylene gas is passed through the gap, it is decomposed. For this reason, the activating structure constituted as described above can effectively be utilized in an apparatus for removing an offensive odor (cigarette's smoke) in domestic or automobile applications, and an apparatus for maintaining the freshness of vegetables and fruits in a refrigerator etc.

Moreover, by providing the activating structure of the present invention in various flues such as in a combustors, furnaces, and chemical plants, harmful substances in the flue such as carbon dioxide, nitrogen oxides, sulfur oxide can also be decomposed.

Specifically, it can be deduced that when activating portions are composed of the activating structure of the present invention whose interior has strong energy focused place , and when they are placed at the apices of a (regular) triangle or (regular) tetrahedron, similar energy focused place will exist in a gap between or among the activating portions.

If the activating portions is composed of the activating structure of the present invention in a donut state, it may be considered that innumerable regular triangles are composed in the gap. Consequently, such an arrangement of the activating portion is also within the scope of the present invention.

The activating structure according to the present invention having excellent effects as described above applies a high energy to a substance being passed through the particles composed of the specific element or stayed in the particles, and the activating structure according to the present invention having excellent effects can be arranged similar to the conventional catalyst to constitute an apparatus for activating a substance.

(Embodiment 1 of Apparatus)

Embodiment of Particle Form Activating Structure and Activating Construction

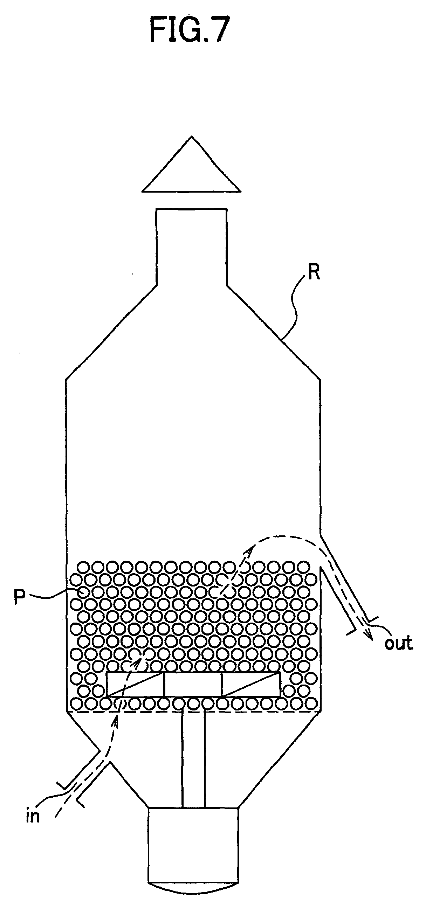

For example, in the case of the particle form activating structure, the activating structure of the present invention as a reactant is placed in a fixed bed manner as commonly used in the catalyst field, or as shown in FIG. 7, the activating structure P of the present invention as a reactant is placed in a container having an inlet (in) and an outlet (out) to constitute a reactor R in a fluidized bed manner, and a gaseous substance or a liquid substance as the subject substance is passed through or stayed in the reactant, whereby the substance can be activated.

Also, the activating construction of the present invention, such as that formed as shown in FIG. 5 (a) to FIG. 5 (f) can activate a substance in a fixed bed manner as in the conventional catalyst particles or in a fluidized bed manner as shown in FIG. 7.

In the case where the apparatus for activating a substance according to the present invention is composed in a fixed bed or a fluidized bed, when a turbulent flow generation mechanism (not shown) is provided to generate a turbulent flow of the substance, an area of contacting the substance with the activating structure or the activating construction shown in FIG. 5 (a) to FIG. (f) , i.e., a possibility that the substance to be treated is stayed in the energy focused place or passed through the energy focused place of the particle form activating structure (construction), is heightened, which makes it possible to activate the substance in much more effective.

As well known in the art, it is within the scope of the invention that first a substance to be treated is previously treated, for example, with the activating construction shown in FIG. 5 (a) to FIG. 5 (f), and then it is treated with the finer particle form activating structure than that used in the pretreatment, for example a finer activating construction shown in FIG. 5 (a) to FIG. (f) in order to activate the substance much more.

(Embodiment 2 of Apparatus)

Embodiment of Plate Form Activating Structure: Treatment of Liquid/Gas Generator

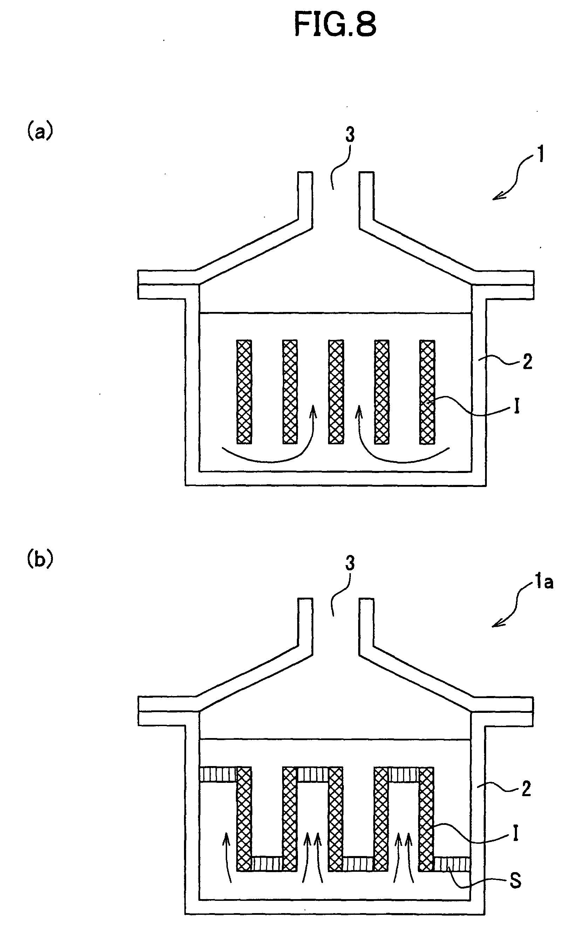

The embodiment exemplifies that the activating structure of the present invention having been formed into a plate (the plate form activating structure) is used in an apparatus for activating a substance. The embodiment will be described by referring to FIG. 8 to FIG. 14.

FIG. 8 to FIG. 14 each shows a cross-sectional view showing an apparatus for activating a substance where the plate form activating structure of the present invention is used to activate a fluid and an additional heater is provided.

As shown in FIG. 8 to FIG. 14, the apparatus for activating a substance according to the present invention is mainly composed of a treating tank 2 for treating a substance in which the plate form activating structure or structures are provided,

The apparatus for activating a substance shown in FIG. 8 is an apparatus for activating a substance having a basic configuration where a liquid as the subject substance is treated with the plate form activating structure of the present invention, where the apparatus 1 for activating a substance shown in FIG. 8 (a) is one embodiment of the present invention where the plate form activating structures are accommodated with the treatment tank 2 in the vertical direction; and the apparatus for activating a substance shown in FIG. 8 (b) is one embodiment of the present invention where the plate form activating structures are provided within the treatment tank 2 so as to vertically divide the treatment tank 2. The apparatuses for activating a substance shown in FIG. 8 (a) and FIG. 8 (B) are apparatuses assuming that generation of a gas is involved during the activation of a substance.

The apparatus 1 for activating a substance shown in FIG. 8 (a) shows one example of the apparatus for activating a substance where the plate form activating structures of the present invention are arranged along the lengthwise direction of the activating structures in the cross-section, and the substance is passed through or stayed in the energy focused place of the activating structure to activate the substance. On the other hand, the apparatus for activating a substance shown in FIG. 8 (b) shows one example of the apparatus for activating a substance where the plate form activating structures of the present invention are arranged at the position where the substance is passed through the interior of the activating structure in the lengthwise direction of the cross section, and the substance is passed through or stayed in the energy focused place of the activating structure to activate the substance.

(Vertical Arrangement)

The apparatus 1 for activating a substance shown in FIG. 8 (a) has a configuration that a plurality of the plate form activating structures I of the present invention (I form) are arranged in parallel. The treatment tank 2 has a gas outlet 3, for example, in the case where a fluid is activated to discharge a gas. For example, in the case where water is used as the subject liquid to be treated, and is activated through the energy focused place of the plate form activating structures I to generate a gas containing hydrogen, first water entering in the energy focused place of the plate form activating structure I is activated to generate a gas. The generated gas is not stayed in the energy focused place, but is floated upwardly as a bubble. The repeating this generates a convection of the substance to be treated as shown in an arrow in FIG. 8 (a). By the convection of the liquid, the bubble discharged at the time of activating the liquid by the plate form activating structure I is not stayed in the energy focused place of the plate form activating structure I over a prolong period of time, but it is rapidly floated.

As described above, the apparatus for activating a substance is configured so that the plate form activating structures of the present invention are arranged along the lengthwise direction of the activating structures in the cross-section, and the substance is passed through or stayed in the energy focused place of the activating structure to activate the substance, a liquid as the subject substance can effectively activated.

(Vertical Division)

On the other hand, the apparatus 1a for activating a substance shown in FIG. 8 (b) has a configuration that the treatment tank 2 is vertically divided by the plate form activating structure.

With regard to the vertical division of the treatment tank 2 by the plate form activating structure, it is the simplest configuration that one plate form activating structure I is provided parallel to the bottom surface of the treatment tank 2 to divide the treatment tank 2 (not shown). It is preferred from the viewpoint of the convection of the liquid that one plate form activating structure vertically divides the treatment tank and another plate form activating structures are arranged in the vertical direction relative to the treatment tank 2.

The apparatus 1a for activating a substance shown in FIG. 8(b) has a configuration that the plate form activating structure is provided within the treatment tank 2 so as to vertically divide the treatment tank 2 and is arranged in the vertical direction relative to the treatment tank 2. Specifically, the apparatus 1a for activating a substance shown in FIG. 8(b) has a configuration that the horizontal surface of the treatment tank 2 is interrupted by an S type plate form activating structure S, or a combination of an I type plate form activating structure I, an L type plate form activating structure L and a U type plate form activating structure (with regard to the activating structure in such an apparatus for activating a substance, herein after totally referred to as activating structure S).

Similar to the apparatus 1 for activating a substance shown in FIG. 8 (a), the apparatus 1 for activating a substance shown in FIG. 8 (b) has a configuration that a plurality of the plate form activating structures I of the present invention (I form) are arranged in parallel. The treatment tank 2 has a gas outlet 3, for example, in the case where a fluid is activated to discharge a gas. For example, in the case where water is used as the liquid to be treated to, and is activated through the energy focused place of the plate form activating structures S to generate a gas containing hydrogen, first water entering in the energy focused place of the plate form activating structure S is activated to generate a gas. The generated gas is not stayed in the energy focused place, but is floated upwardly as a bubble. The repeating this generates a convection of the substance to be treated as shown in an arrow in FIG. 8 (b) .

Since the activating structure S sections the vertical direction of the treatment tank 2, i.e., the horizontal plane of the treatment tank 2, the bubbles generated by the activation of the substance are surely passed through the activating structure S and then floated. Such a configuration increases the possibility that the liquid as the subject substance enters in the energy focused place of the activating structure S, increasing the activating speed (reaction rate).

(Applied Embodiment 1: Heating Activating Structure)

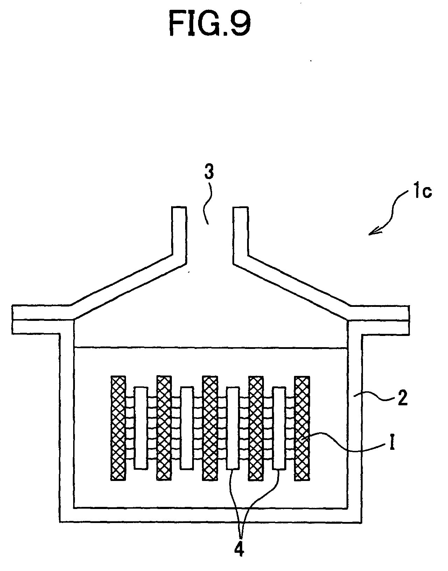

Preferred embodiments of the apparatus for activating a substance having a configuration described above will now be described by referring to FIG. 9 to FIG. 16. In the description of the applied embodiments, with regard to the description applicable both to the apparatus 1 for activating a substance shown in FIG. 8 (a) and the apparatus 1a for activating a substance shown in FIG. 8 (b), embodiments of the apparatus 1 for activating a substance shown in FIG. 8 (a) will be mainly described and the description of the corresponding embodiments for the apparatus 1a for activating a substance shown in FIG. 8 (b) will be omitted.

The apparatus 1c for activating a substance shown in FIG. 9 is an apparatus for activating a substance in which the convection of the substance is forcibly generated by heating the substance. This apparatus 1c for activating a substance shown in FIG. 9 is applicable both to the apparatus 1 for activating a substance shown in FIG. 8 (a) where the plate form activating structures I are accommodated with the treatment tank 2 in the vertical direction, and to the apparatus 1a for activating a substance shown in FIG. 8 (b) where the plate form activating structure S is provided within the treatment tank 2 so as to vertically divide the treatment tank 2 . Specifically, whereas the apparatuses 1 and 1a for activating a substance shown in FIG. 8 (a) and FIG. 8 (b) the convection of the substance is generated due to the generation of the gas accompanying with the activation of the substance so-called spontaneous manner, this apparatus positively generates the convection by heating the plate form activating substance (and the substance).

The apparatus 1c for activating a substance shown in FIG. 9 is composed of a treatment tank 2 in which a plurality of the plate form activating structures I are placed in parallel, and heating elements, which are heaters 4 are placed between the plate form activating structures I at an interval. The number of the plate form activating structures I and that of the heating elements , which are heaters 4 , are not particularly restricted, and are suitably selected depending upon the kind of the substance to be treated, the volume of the treatment tank 2, and any other factors.

In such a configuration, the radiant heat from the heating elements which are the heater 4 is transmitted to the substance which is in a liquid state in vicinity of the heating element, whereby the convention of the substance is generated. Then, when the convection of the substance thus occurs, the possibility that the substance is passed through the energy focused place (not shown) of the plate form activating structures I, accelerating the activation of the subject substance.

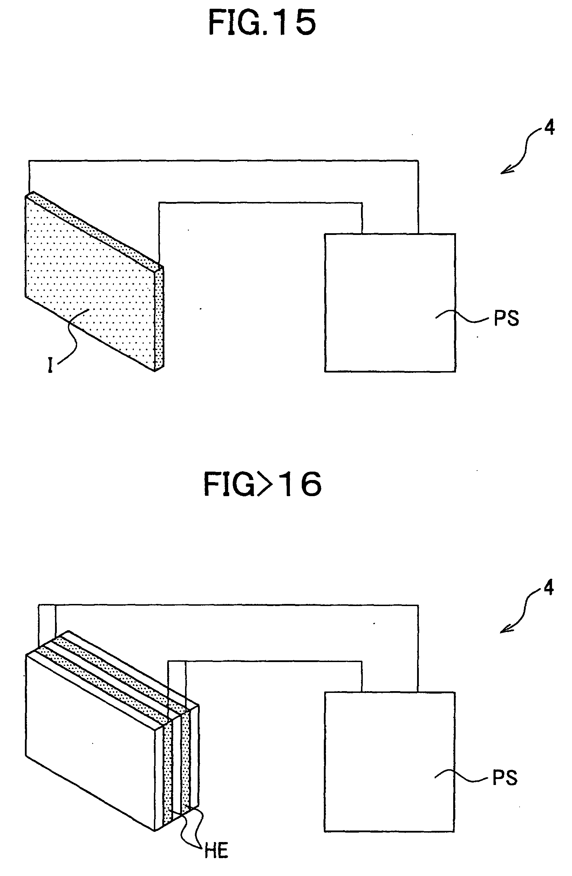

Examples of heating the plate form activating structure by such heaters are shown in FIG. 15 and FIG. 16.

Specifically, FIG. 15 is a perspective view showing one example where the plate form activating structures of the present invention are directly heated, and FIG. 16 is a perspective view showing another example where the plate form activating structures of the present invention are directly heated.

The heater 4 shown in FIG. 15 is configured so that a heterogeneous electric conductive metal is plated on the plate form activating structure I, and a voltage is applied to the plated activating structure I via conductors from a power source PS to heat the plate form activating structure. The thickness of the heterogeneous electric conductive metal plating is suitably selected within the range where the functions of the activating structure of the present invention are not interfered and, is, for example, in the range of from 3 to 5 microns. A partial plating is proven to be particularly effective.

Heaters 4 shown in FIG. 15 may be applied to all the plate form activating structures, e.g., 5 plate form activating structures shown in FIG. 9, or may be applied to part of the plate form activating structures, e.g., in every other plate form activating structures . Also, in the case where a plurality of the heaters 4 shown in FIG. 15 are applied. All the plate form activating structures I are connected to conductors in parallel or series to apply a voltage from one power source. Alternatively, the plate form activating structures I are connected to separate power sources.

In such a configuration, the voltage from the power source or power sources can be controlled to freely control the heating amount of the plate form activating structure I. Consequently, this configuration makes it possible to adjust the activating speed of the substance. The controlling of the activating speed of the subject substance is easier than that in the apparatuses 1 and 1a for activating a substance where the convection of the substance occurs spontaneously.

The heater 4 shown in FIG. 16 has a configuration that heating elements HE are place between the plate form activating structures I.

These heating elements HE are essential to be a porous in order to effectively pass the substance through the energy focused place of the plate form activating structure I. Such porous heating elements HE can be selected from those well-known as various ceramic heating elements.

Since the convection of the substance can be controlled by controlling the heating amount of the heating elements, the speed of activating the substance can be controlled. The controlling of the activating speed of the substance is easier than that in the apparatuses 1 and 1a for activating a substance where the convection of the substance occurs spontaneously.

Heaters 4 shown in FIG. 15 and FIG. 16 may be applied to the plate form activating structures in the plate form activating structure S in the apparatus 1a for activating a substance shown in FIG. 8 (b) in a similar configuration to exhibit similar effects.

(Applied Embodiment 2: Indirect Heating of Plate Form Activating Structure)

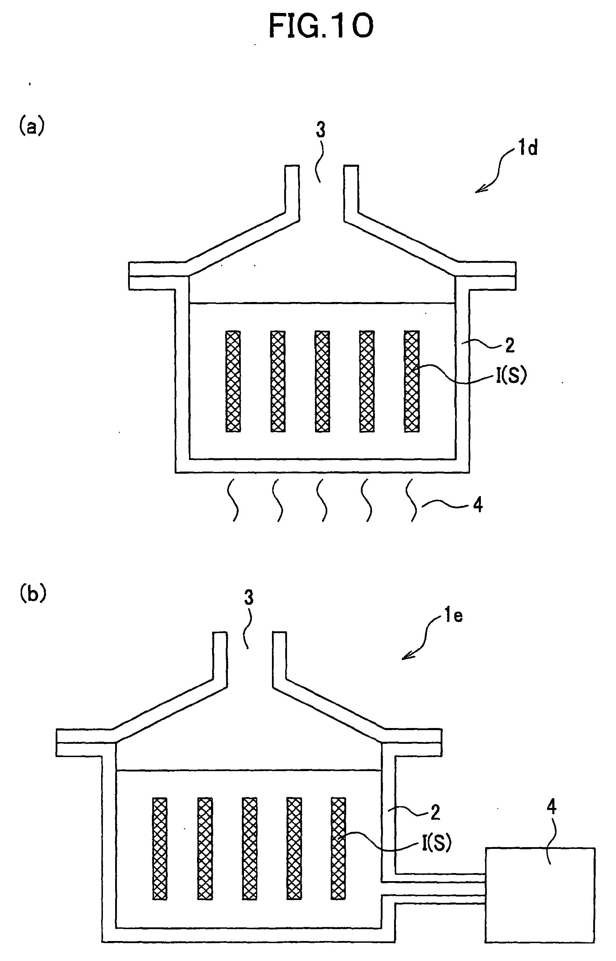

An apparatus for activating a substance shown in FIG. 10 is composed of the treatment tank 2 in which plate form activating structures I (S) are placed, and a heater 4, which externally heats the substance in the treatment tank 2.

An apparatus 1d for activating a substance shown in FIG. 10 (a) is one embodiment where the heater 4 is arranged in contact with the treatment tank 2. In addition to the configuration shown in this figure, heater or heaters may be provided in contact with the side surface(s) of the treatment tank 2. Alternatively, a heater 4 such as a tube for a heating medium may be proved so as to cover the whole surface of the treatment tank 2. An apparatus 1e for activating a substance shown in FIG. 10 (b) is configured so that an external heater which is the heater 4 is assembled together with (unified with) the treatment tank 2. This configuration is similar to a manner, for example, that water in a bathtub is heated by a gas bath heater.

Differing from the apparatus 1c for activating a substance shown in FIG. 9, the apparatuses 1d and 1e for activating a substance shown in FIG. 10 have a heating manner that the substance is heated to indirectly heat the plate form activating structures I. Similar to the apparatus 1c for activating a substance shown in FIG. 9, such a configuration generate the convection of the substance within the treatment tank 2. Upon generating the convection of the substance, the possibility that the substance to be treated is passed through the energy focused place in the plate form activating structures I is increased, accelerating the activation of the substance.

Since the convection of the substance can be controlled by controlling the heating amount of the heating element, the activating speed of the substance can easily be adjusted similar to the embodiments shown in FIG. 9.

(Applied Embodiment 3: Vertical Movement of Activating Structure)

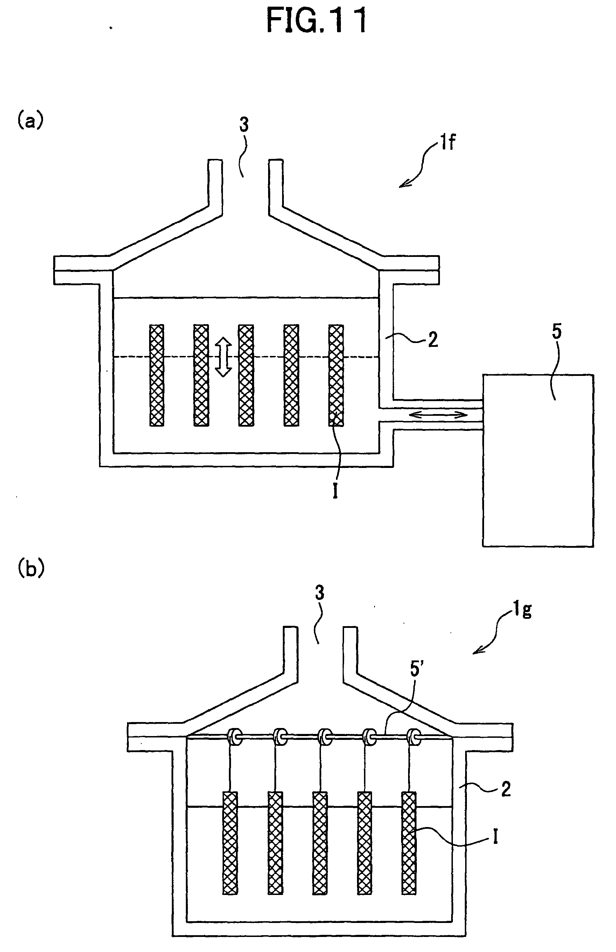

An apparatus 1f for activating a substance shown in FIG. 11 is an apparatus for activating a substance having a configuration that a relatively positional relation between the plate form activating structure I (S) and the liquid surface of the liquid as the subject substance to be treated within the treatment tank 2 is changed. By changing a relatively positional relation between the plate form activating structure and the liquid surface of the liquid, as described above, the area of the plate form activating structure I in contact with the liquid as the subject substance to be treated is changed. Specifically, in this apparatus, the reaction volume is changed to adjust the activating speed.

Such a type of the apparatus can take two configurations when being roughly divided. Specifically, FIG. 11 (a) shows an apparatus 1f for activating a substance in such a manner that an external tank 5 is unified with the treatment tank 2, and the liquid surface of the substance is changed by the external tank 5. In the apparatus 1f for activating a substance shown in FIG. 11 (a), the external tank 5 changes an amount (volume) of liquid within the treatment tank 2 by means for regulating an amount of liquid (such as a valve for regulating an amount of liquid) (not shown) . When the amount of the liquid is changed as described above, the are of the plate form activating structure I in contact with the liquid as the subject substance to be treated, is changed accordingly. In other words, the amount of the plate form activating structure I soaked in the substance to be treated is changed. For this reason, the absolute amount of the liquid as the subject substance to be treated, entering in the energy focused place (not shown) in the plate form activating structure I is changed.

Differing from an apparatus 1f for activating a substance shown in FIG. 11 (a) , an apparatus 1g for activating a substance shown in FIG. 11 (b) is configured so that the plate form activating structure I is directly moved in the vertically direction by vertically moving means 5' to change the area of the plate form activating structure I in contact with the liquid, as the subject substance to be treated. Similar to the apparatus 1f for activating a substance shown in FIG. 11 (a), this apparatus has a configuration that the reaction amount is controlled by the change of the area of the plate form activating structure I in contact with the liquid.

As shown in FIG. 11 (a) and FIG. 11 (b) , when the relative contact area between the plate form activating structure I and the liquid as the subject substance to be treated, is configured to be changed, there is a merit that the activation of the substance can be stopped by completely separating the plate form activating structure I from the liquid as the subject substance to be treated.

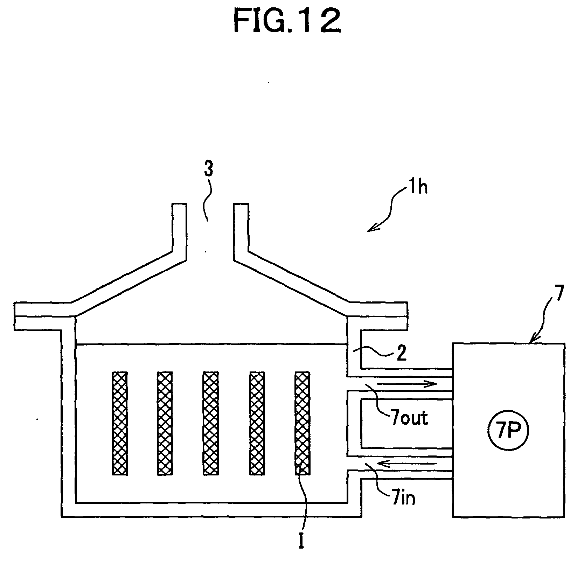

Apparatuses 1h to 1j for activating a substance shown in FIG. 12 to FIG. 13 (b) are apparatuses for activating a substance in which a circulator, which circulates the liquid as the subject substance to be treated, is provided to forcibly circulate the substance to be treated.

An apparatus 1h for activating a substance shown in FIG. 12 has a configuration of the apparatus for activating a substance shown in FIG. 8, and further having a circulator provided on a side surface of the treatment tank 2.

The apparatus 1h for activating a substance shown in FIG. 12 shows an embodiment that the circulator is composed, for example, of a circulating pump 7P, an inlet 7 in for the substance to be treated, and an outlet 7 out for the substance to be treated. In such a configuration, as shown by an arrow in the figure, the substance to be treated entering from the inlet 7in positioned at a lower potion of the side surface of the treatment tank 2 is pumped by the circulating pump 7P , and then is exhausted from the outlet 7 out positioned at an upper potion of the side surface of the treatment tank 2 at a prescribed flow rate.

Forcible convection of the substance occurs by the flow of the subject substance generated by the circulator. The degree of the convection can be adjusted by adjusting the pumping rate of the circulating pump 7P and, thus, the activation degree of the substance to be treated can be adjusted as occasion demands.

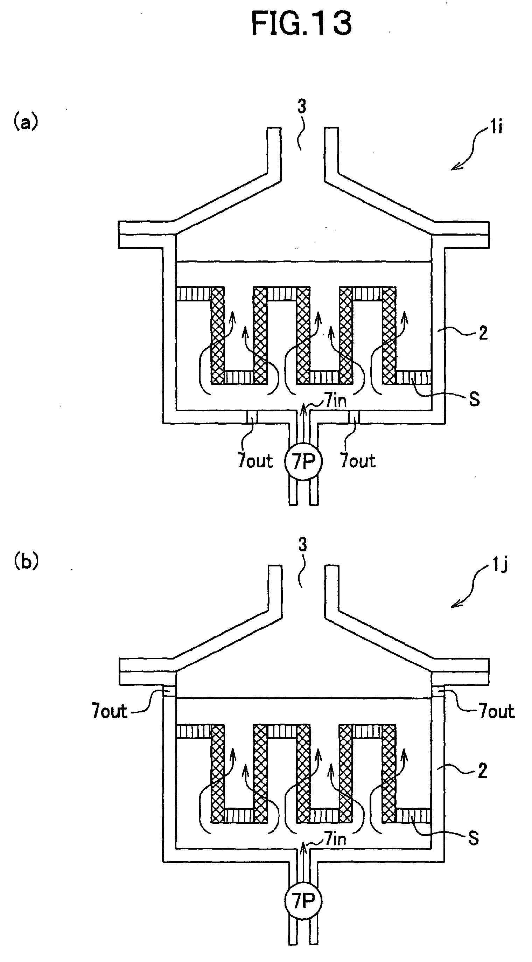

Apparatuses for activating a substance shown in FIG. 13 (a) and FIG. 13 (b) are configured so that a pump 7P which is the main body of the circulator, is provided on the bottom surface of the treatment tank 2. In the apparatus 1i for activating a substance shown in FIG. 13 (a), an outlet 7 out for the substance to be treated is provided on the bottom surface of the treatment tank 2, and in the apparatus 1j for activating a substance shown in FIG. 13 (b), an outlet 7out, which is an outlet of the substance to be treated is provided on an upper side of the side surface of the treatment tank 2.

In the apparatus 1i for activating a substance shown in FIG. 13 (a), the pump 7P was placed on the center portion of the bottom surface of the treatment tank 2 and a plurality of outlets 7out are provided around the pump 7P. In this configuration, the fluid as the subject substance to be treated, having been pumped by the pump 7P is uniformly diffused within the treatment tank 2.

In the apparatus 1j for activating a substance shown in FIG. 13 (b), the pump 7P was placed on the center portion of the bottom surface of the treatment tank 2 and the apparatus has at least one outlet 7out for the substance to be treated is provided on a prescribed portion of the side surface of the treatment tank 2, i . e., a portion higher than the interface of the substance to be treated. It is configured that the fluid as the subject substance to be treated, is pumped upwardly by the pump 7P at a prescribed flow rate to overflow from the outlet 7out provided on an upper portion of the interface of the substance to be treated, whereby the fluid flows out of the treatment tank 2. Similar to the apparatus 1i for activating a substance shown in FIG. 13 (a), the fluid as the subject substance to be treated, having been pumped by the pump 7P is also uniformly diffused within the treatment tank 2 in the apparatus 1j for activating a substance shown in FIG. 13 (b) .

In the apparatuses 1i and 1j for activating a substance shown in FIG. 13 (a) and FIG. 13 (b) where the pump 7P which is the circulator is provided on the bottom of the treatment tank 2, the flow amount of the substance can be controlled by the pump 7P to increase the activating speed of the substance and to adjust the activating speed of the substance.

Particularly, the apparatuses 1i and lj for activating a substance shown in FIG. 13 (a) and FIG. 13 (b) where the pump 7P which is the circulator is provided on the bottom of the treatment tank 2 are applied to the apparatus 1a for activating a substance having a basic configuration as shown in FIG. 8 (b), i.e., the apparatus for activating a substance in which the substance to be treated is crossing to the interior of the activating structure S to be activated.

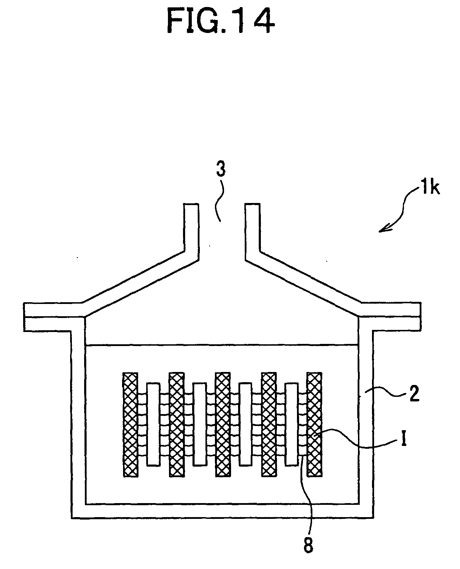

An apparatus 1k for activating a substance shown in FIG. 14 has a configuration that in the apparatus 1 for activating a substance shown in FIG. 8 (the apparatus 1a for activating a substance), oscillating elements 8 are provided in the vertical direction of the plate form activating structures I (plate form activating structure S) in parallel.

By providing the oscillating element 8 and applying prescribed vibration to the plate form activating structure I through the oscillating element 8, the substance existing within the corresponding plate form activating structure I in which the vibration has been applied and the activating structure I near the corresponding plate form activating structure I can effectively directed to the energy focused place of the plate form activating structures I, whereby the activation of the substance to be treated can effectively performed. Particularly, the substance having been stayed within the plate form activating structures I and bubbles generated by the treatment can be discharged out.

The embodiments of the apparatus for activating a substance have been described where the substance to be treated is a liquid by referring to FIG. 8 to FIG. 14, the combinations of these techniques are also within the scope of the present invention. Specifically, for example, it is possible to provide both the heater 4 and the circulator on the apparatus for activating a substance having a basic configuration as shown in FIG. 8.

Also, it is possible to provide the particle form activating structure or the activating construction having a prescribed shape as shown in FIG. 12 and FIG. 13 on a lower portion or an upper portion of the treatment tank 2 in a fluidized bed manner.

The apparatus for activating a substance composed as described above can effectively utilized as a hydrogen generator and an apparatus for treating water, which will be described fully later on.

(Embodiment of Apparatus: Gas Treatment)

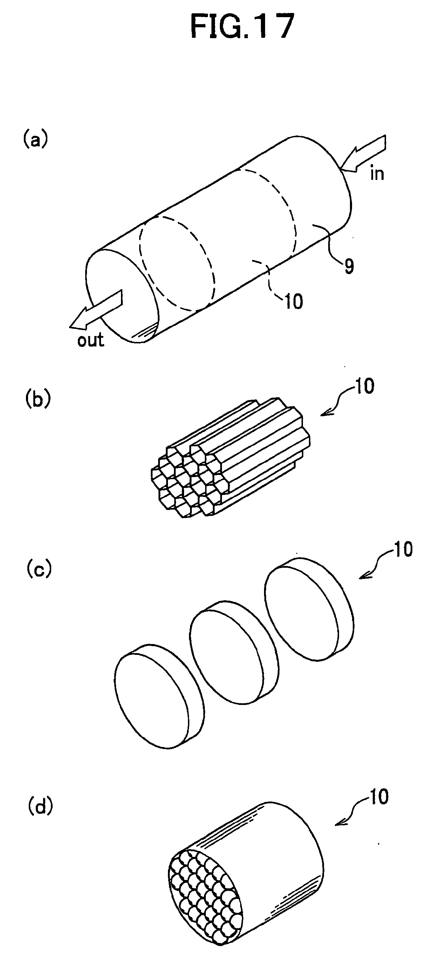

Embodiments of an apparatus for activating a gas as the subject substance to be treated utilizing the activating structure according to the present invention will now be described by referring to FIG. 17.

FIG. 17 (a) to FIG. 17 (d) are drawings showing still another embodiment of the apparatus for activating a substance according to the present invention, where FIG. 17 (a) is a cross-sectional view of the apparatus for activating a substance according to the present invention, FIG. 17 (b) to FIG. 17 (d) are schematic views each showing an example of filling with the activating structures in the apparatus in FIG. 17 (a).

As shown in FIG. 17 (a) , the apparatus for activating a substance according to the present invention for the purpose of activating a gas as the subject substance has a configuration that within a body 9 of an apparatus for activating a substance having a gas inlet (in) and a gas outlet (out), an activating portion 10 composed of the activating structure of the present invention is provided or filled.

A gas, as the subject substance, such as an exhaust gas or ethylene flows from the gas inlet (in) into the body 9 of the apparatus for activating a substance at a prescribed flow rate. The gas flowing into the body 9 of the apparatus for activating a substance is then passed through the activating portion 10 composed of the activating structure of the present invention. At the time of being passed through the activating portion 10, the gas, which is the subject substance, is passed through the energy focused place possessed by the activating portion 10. The gas, which is the subject substance, is activated by the energy focused place , and is then discharged from the gas outlet (out).

The activation of a gas intended in the present invention should include, for example, a conversion of oxygen into an oxygen ion, and decomposition of harmful substances such as ethylene and carbon dioxide into harmless substance.

The body 9 of the apparatus for activating a substance may take any form depending upon an intended applications, for example, the decomposition of harmful gas in a flue, and the decreasing of carbon dioxide in an exhaust gas from an automobile. Specifically, in the case where the apparatus for activating a substance according to the present invention is applied to the decomposition of harmful gas in a flue, the flue may comprise the body 9 of the apparatus for activating a substance. Also, in the case where the apparatus for activating a substance according to the present invention is applied to the decreasing of carbon dioxide in an exhaust gas from an automobile, the apparatus for activating a substance according to the present invention can be provided, for example, on a silencer portion of an engine muffler.

Consequently, the flue and the engine muffler on which the apparatus for activating a substance according to the present invention is to be provided makes up the apparatus for activating a substance according to the present invention.

A filter (not shown) may be provided on a former state of the body 9 of the apparatus for activating a substance to previously remove impurities such as dusts and dirt. Moreover, the activating portion 10 may be provided on the body 9 of the apparatus for activating a substance in a detachable manner.

The activating structure according to the present invention filled with or provided on the activating portion 10 of the body 9 of the apparatus for activating a substance, specifically, the activating portion 10, may take any forms depending upon intended applications. Specific examples of the arrangement of the activating structure on the activating portion 10 of the apparatus for activating a substance according to the present invention for activating a gas, which, is a substance to be treated are shown in FIG. 17 (b) to FIG. 17 (d) .

The activating portion 10 shown in FIG. 17 (b) is an activating structure formed into a honeycomb, for example, by sintering as described above, The honeycomb catalyst having a configuration like the activating structure formed into a honeycomb has been used as a catalyst for activating a gas in the various fields. By being formed into a honeycomb configuration, the activating structure of the present invention can be handled like the honeycomb catalyst. Specifically, the honeycomb activating portion 10 is suitable for activating a gas being passed through the activating portion 10 at a relatively high flow rate. Optionally, a substance which aids the activation of a substance, such as the conventionally known catalyst and activated carbon, may be introduced into the interior of the honeycomb activating portion 10. Of course, it is possible to incorporate the particle form activating structure or the particle form activating construction according to the present invention in addition to or instead of the catalytic particles, activated carbon etc.

The activating portion 10 shown in FIG. 17 (c) is composed of at least one activating structure of the present invention (three activating structures in this figure) inserted in the inner wall surface of the body 9 of the apparatus for activating a substance. As well known in the art, the porosity of the activating structure may be graduated from coarseness to dense from the gas inlet (in) to the gas outlet (out) . Furthermore, similar to the activating portion 10 shown in FIG. 17 (b) , the particle form activating structure or the particle form activating construction according to the present invention or catalyst particles, activated carbon or such may be incorporated between the plate form activating structure I.

The activating portion 10 shown in FIG. 17 (c) is an embodiment that the particle form activating structure or the particle form activating construction according to the present invention is directly incorporated. Similar effects can be exhibited by such a configuration of the activating structure (as the particle form or as the activating construction).

Also, when the activating structure of the present invention is provided within a refrigerator, ethylene gas (aging hormone) generated during the course of maturing (excess maturing) vegetables or fruits can be decomposed. This means that the activating structure of the present invention can be used as an agent for maintaining freshness.

(Turbulence)

When a mechanism for generating a turbulent flow (not shown) is provided at an inlet (in) for a substance to be treated whereby a turbulent flow of the substance to be treated (liquid and gas) is generated, making it possible to effective activate the substance to be treated.

The mechanism for generating turbulent flow is well-known in the catalyst fields. For example, when projections are provided within the conduit, which directs the substance to be treated, spiral flow will occur at the time of collision of the fluid with the projections. When the substance to be treated with in a spiral flow is collided with the activating structure of the present invention, the substance to be treated is diffused and is passed through the energy focused place .

(Separation of Gas)

The gas generated by the apparatus for activating a substance (gas generator) according to the present invention can be separated and collected by the method well known in the art as occasion may demand.

For example, water, which is the subject substance, is activated by the apparatus for activating a substance (gas generator) according to the present invention to obtain a mixed gas comprising hydrogen, oxygen and nitrogen (see Example 1 and the like, which will be described later on) . In the case where the resultant mixed gas is separated into hydrogen and other gas components (a mixed gas containing oxygen and nitrogen), an apparatus for separating a gas which separates gas components due to difference in the specific gravities of the gas components (since hydrogen has a weight lighter than other gas components, it can be collected at an upper portion), an apparatus for separating a gas through a membrane or any other apparatuses can be used.

Also, a layer of an absorbing agent or absorbent such as silica, alumina, activated carbon can be used to separate a gas.

Consequently, the present invention is extended to an apparatus which selectively separates and recovers a specific gas utilizing such an separating apparatus.

(Hydrogen Generating System)

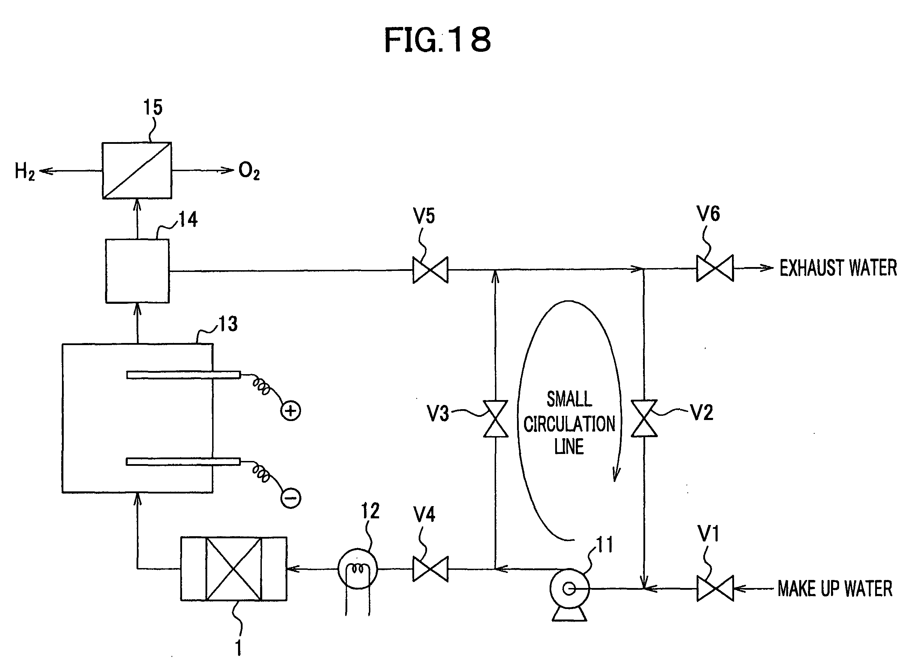

FIG. 18 shows an embodiment where the apparatus for activating a substance composed of the activating structure according to the present invention is applied to a hydrogen generating system.

In this case, any of the apparatuses for activating a substance (gas generators) shown in FIG. 8 to FIG. 18 may be used as the apparatus for activating a substance.

While water is exemplified as the subject substance to be treated, it should be noted that an aqueous medium, hydrocarbon or the like may have the similar effects.

(1) First, valves V1, V2, and V3 are opened whereby water is supplied from the valve V1 to form a small water circulation line. A water circulation pump 11 is started to circulate water. Valves V4 and V5 are in opened states, and a valve V3 is in a closed state.

(2) Water is circulated within a large circulation line comprising a heater 12, the apparatus 1 for activating a substance to be treated, an electrolysis tank 13, a gas/liquid separator 14, the valve V5, the valve V2, the circulation pump 11, and the valve V4.

(3) The heater 12 is turned on. The reason why water is heated by the heater is for further accelerating the activation of water, as the subject. It is possible to use the heating means 4, for example, in the apparatus for activating a substance shown in FIG. 9 or FIG. 10 instead of the heater 12.

When water is passed through the apparatus 1 for activating a substance according to the present invention, an energy is imparted to the water at the energy focused place in the plate form activating structure I (S) to activate water.

(4) The electrolysis tank 13 is turned on. A gas is generated by electrolyzing water.

At this time, the water is heated by the heater 12 (heating means 4), and the water molecules are further activated by the apparatus 1 for activating a substance, resulting in the fact that the electrolysis of the water within the electrolysis tank 13 is accelerated to increase the amount of hydrogen generated per unit power.

(5) The liquid containing bubbles exhausted from the electrolysis tank 13 is incorporated in the gas/liquid separator 14 at which the bubbles are selectively separated from the liquid containing the bubbles.

(6) The bubbles separated from the gas/liquid separator 14 are treated with a membrane separator 15 having a hydrogen permeable membrane well known in the art (for example, a hydrogen permeable membrane separated available from MONSANTO CO., LTD, under a trade name of "prism separator" . Specifically, by passing the bubbles through the hydrogen permeable membrane, the hydrogen is transmitted and recovered, while the gas containing oxygen, which cannot be transmitted through the hydrogen permeable membrane is discharged to the atmosphere as is.

(7) On the other hand, the liquid separated by the gas/liquid separator 14 is gain circulated within the system by means of the water circulation pump 11.

(8) The amount of the water having been electrolyzed and consumed during the course of the operation is supplemented from the valve 1 as supplementary water.

In the case where the activity of the apparatus 1 for activating a substance according to the present invention is high enough, the electrolysis tank 3 may be omitted. Alternatively, in such a case, another apparatus 1 for activating a substance according to the present invention may be provided in series.

The hydrogen generation system constructed as described above can availably be applied to various power generators (including internal combustion engine and external combustion engine) utilizing hydrogen as fuel, particularly power generator for automobile.

(Activation of Water: Electrolysis)

The electrolysis of water can be carried out utilizing water or electrolyzed water with the apparatus for activating a substance to be treated as shown in FIG. 8.

At this time, since the water can be activated even if current is applied through the cathode and anode in contrast to the conventional technique, the amount of the energy consumed can be decreased. The electrolyzed water can be prepared only by a simple construction that the activating structure of the present invention is placed within a container.

The electrolyzed water prepared with the apparatus for activating a substance according to the present invention as described above can be utilized in a wide variety of applications like the conventional techniques.

(Activation of Water: Excitation)

The apparatus for activating a substance according to the present invention can be used to manufacture an apparatus for activating water for the purpose of finely dividing clusters of water.

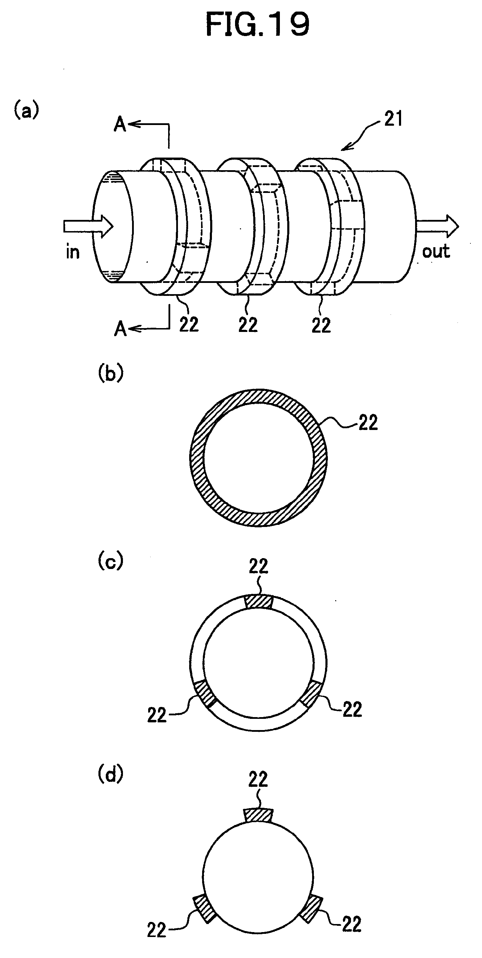

FIG. 19 (a) is a perspective view showing an embodiment where the apparatus for activating a substance according to the present invention is used for finely dividing clusters of water. , and FIG. 19 (b) to FIG. 19 (d) are the cross-sectional views of FIG. 19 (a) taken along the line A-A.

As shown in FIG. 19 (a), the apparatus for activating a substance in this embodiment is composed of a body 21 of the apparatus for activating a substance having a water inlet (in) and a water outlet (out). Further, an activating portion 22 comprising at least one activating structure of the present invention is provided outside of the body 21 of the apparatus for activating a substance.

The activating portion 22 may take any form, for example, as shown in FIG. 19 (b) to FIG. 19 (d). Specifically, as shown in FIG. 19 (b), the activating portion 22 may be formed so that the full outer circumference of the body 21 of the apparatus for activating a substance is covered with the activating structure (the particle form activating construction or the plate form activating structure); as shown in FIG. 22 (c), the activating portion 22 may be formed so that part of outer circumference of the body 21 of the apparatus for activating a substance is covered with the activating structure (the particle form activating construction or the plate form activating structure); or as shown in FIG. 22 (d), the activating portion 22 may be formed so that the plate form activating structures are placed at an interval. In the case where plate form activating structures are placed at an interval, the plate form activating structures are preferably placed so that the cross section of the plate form activating structures form a (regular) triangle.

The activating portion 22 may be formed so as to fully cover the body of the apparatus in the lengthwise direction, or may be composed of a plurality of the activating portions 22 as shown in FIG. 19 (a).

In such a configuration as described above, unlike the conventional apparatus utilizing a magnet, since the clusters of water can be finely divided without contact of the water into a magnetic metal, oxides and chlorides originated from the magnetic metal cannot be dissolved in water. Also, since the activating portion composed of the activating structure of the present invention is placed outside, the maintenance of the apparatus can be performed with ease.

As described above, the activating structure of the present invention can be used to activate a wide variety of substances with a simple configuration. The apparatus for activating a substance to be treated thus constructed can be used to activate a wide variety of substances without applying a large energy.

EXAMPLES

The present invention will now be described based on the working examples, but it should be noted that the present invention is not restricted thereto.

EXAMPLE 1

This example was carried out at a place where no sunlight enters and no room light directly enters

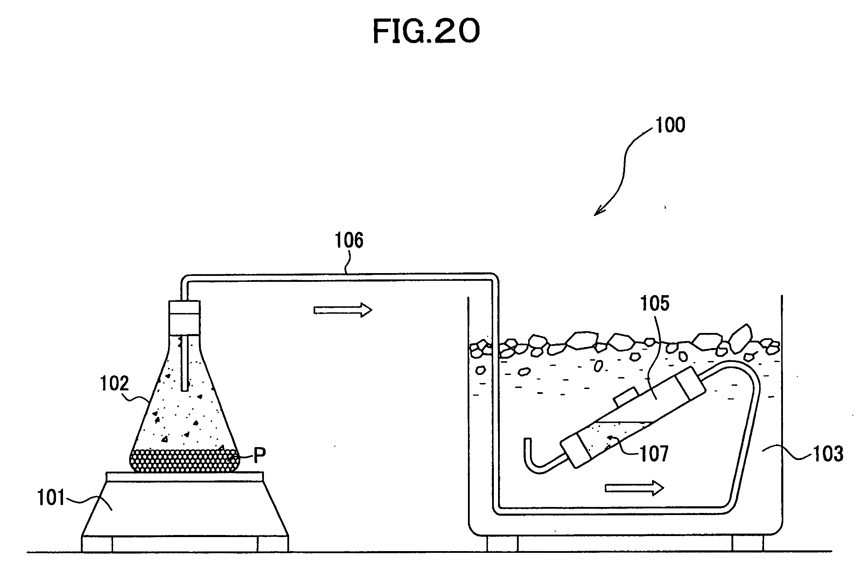

In this example, a 98.0% pure silicon was used to produce truly globular particles having a particle diameter of from 5 to 80 microns (maximum diameter = 150 microns) by a gas-atomizing method, and 100 cm$^3$ of the resulting particles (P1) was laminated in a 300 cc volume conical flask to produce a hydrogen generator containing the activating structure of the present invention as shown in FIG. 20.

In this hydrogen generator 100, a conical flask 102 which was placed on a heating plate 101 and in which particles P was introduced was gas-tightly connected to a collecting bottle 105 for collecting a gas placed in a water tank 103, which was filled with a gas and ice water via a conduit 106.

The reason why the water tank 103 was filled with ice water is that the steam was previously condensed within the water tank 103 so that the inner pressure of the collecting bottle 105 after being taken out of the water tank 103 was not lower than the room pressure, and the temperature within the water tank 103 was kept at 10°C or lower.

Since it has been confirmed that the gas within the collecting bottle can be separated by the difference in the specific gravity, a tip 107 had been incorporated into the collecting bottle in order to thoroughly stir the content before a gas chromatographic analysis.

Subsequently, purified water (92°C) was incorporated in the conical flask 102 in an amount such that up to the tip of the collecting bottle 105 having a volume of 164 cc was filled with the purified water, the hydrogen generator (system) was left standing at this temperature, and then the gas generated in the collecting bottle 105 was collected. The gas chromatography of the collected gas revealed that the gas was composed of 78 volume% of hydrogen gas, 5 volume % of oxygen gas, and 17 volume % of nitrogen gas.

EXAMPLE 2

An experiment was repeated as in Example 1, except that the purified gas was kept at a temperature of 50°C and 90°C, respectively. As a result, the amount of the gas generated at 50°C was found to be 28 cc/hour, and the amount of the gas generated at 90°C was found to be 56 cc/hours. This experiment showed that the decomposition rate of the water at 90°C was accelerated in comparison with that at 50°C.

Similarly, the gas chromatography of the collected gas revealed that the gas was composed of 78 volume% of hydrogen gas, 5 volume % of oxygen gas, and 17 volume % of nitrogen gas.

EXAMPLES 3 to EXAMPLE 10

Example 1 was repeated, except that the volume of the activating structure was 75 cm$^3$, the temperature of the purified water was 90°C or 99°C, and the particle size of the activating structure was as shown in Table 2. The amounts of the gas generated are shown in Table 2.

Table 2

| Example No. | Particle Diameter (d) (Micron) | Temperature (°C) | Amount of Gas Generated (cc/10 min.) |
| --- | --- | --- | --- |
| 3 | D<32 | 90 | 4.3 |
| 4 | D<32 | 99 | 6.6 |
| 5 | 32<d<52 | 90 | 3.6 |
| 6 | 32<d<52 | 99 | 5.0 |
| 7 | 52<d<75 | 90 | 2.8 |

Table 2   (continued)

| Example No. | Particle Diameter (d) (Micron) | Temperature (°C) | Amount of Gas Generated (cc/10 min.) |
| --- | --- | --- | --- |
| 8 | 52<d<75 | 99 | 3.6 |
| 9 | 75<d<180 | 90 | 0.5 |
| 10 | 75<d<180 | 99 | 1.0 |

From the results of Table 2 it has been proven that at the same temperature, the particle size making up the activating structure is smaller, the amount of the gas generated is increased much more, showing a high activity.
Also, as a result of repeated experiments, although the reason has been unclear, the generation of nitrogen gas was observed. The volume ratio of oxygen gas to nitrogen gas was 1: approximately 3.4, indicating that air containing somewhat excess amount of oxygen is obtained.

COMPARATIVE EXAMPLE 1

An operation similar to Example 1 was carried out, except that a comparative activating structure (PC) produced by utilizing irregular particles shown in FIG. 2 (b) was used. As a result, the generation of a gas could not be observed.

EXAMPLES 11 to EXAMPLE 14

Similar to Example 1, activating structures (2) to (5) were produced utilizing Ti (activating structure (P2), Ni (activating structure (P3), Sm (activating structure (P4), and FC (activating structure (P5).

EXAMPLE 15 AND COMPARATIVE EXAMPLES 2 AND 3

(Plate Form Activating Structure)

The activating structure (P1) obtained in Example 1 was subjected to an antistatic treatment, and sintered under the conditions shown in Table 3 to produce a plate form activating structure (T1) according to the present invention.
Comparative structures (TC2 and TC3) were produced in the same manner as in Example 15, except that no antistatic treatment was carried out (Comparative Example 3). The comparative structure TC2 has a porosity similar to that of the structure T1 according to the present invention and the comparative structure TC2 has a porosity of 60% or more.
Physical properties of these plate form structures are shown in Table 3 and FIG 4 (a) to FIG. 4 (c).

Table 3

| | Structure(T1) | Structure (TC2) | Structure (TC3) |
| --- | --- | --- | --- |
| Production Conditions | | | |
| Sintering Temperature | 1300°C | 1300°C | 1300°C |
| Sintering Time | 180 min. | 180 min. | 180 min. |
| Sintering Pressure | 25 MPa | 25 Mpa | 25 Mpa |
| Thickness (mm) | 0.5 | 0.5 | 0.5 |
| Length (mm) | 20 | 20 | 20 |
| Width (mm) | 50 | 50 | 50 |
| Porosity | 45-60% | 50-60% | 60%- |
| Cross-section al Shape | FIG. 4(a) | FIG. 4(b) | FIG. 4(c) |
| Energy-focuse d Place | Presence | Absence | Absence |

As is clear from the photographs in FIG. 4, the activating structure T1 produced under the conditions of the present invention has an energy focused place among the particles, but comparative structures TC2 and TC3 produced under the conditions deviating from those of the present invention, i.e., having no energy focused place among the particles only have insufficient energy focused place .

It is noted that when the activation of water was carried out utilizing comparative structures TC2 and TC3, generation of any gas could not be observed.

EXAMPLE 16 (Other Activating Structures)

Examples 1 was repeated utilizing the activating structures (P2 to P5) . As a result, the generation of hydrogen was observed.

This indicated that the activating structures each consisting of titanium, nickel, samarium, and carbon fluoride also exhibited the effects similar to the structure consisting of Si.

EXAMPLE 17 and COMPARATIVE EXAMPLES 5 AND 6

Examples 1 was repeated utilizing the plate form activating structure T1 according to the present invention and comparative structures TC2 and TC3 and the apparatus shown in FIG. 8. As a result, vigorous generation of a gas was observed in the plate form activating structure T1 according to the present invention, but no generation of a gas was observed in comparative structures TC2 and TC3.

The gas chromatographic analysis of the gas collected in Example 17 revealed that the gas comprised 78 volume% of hydrogen gas, 5 volume% of oxygen gas and 17 volume% of nitrogen gas.

EXAMPLE 18

Examples 15 was repeated utilizing liquids shown in the following Table 4 to observe the generation of gas (hydrogen) . The results are shown in Table 4. The conditions for generating a gas was visibly evaluated wherein well generation indicates "Excellent", generation indicates "Good", and slight or no generation indicates "poor".

Table 4

|  | Structure (T1) | Structure (TC2) | Structure (TC3) |
|---|---|---|---|
| Water(at Normal temperature) | Good | Poor | Poor |
| Seawater | Excellent | Poor | Poor |
| Alkali Ion Water* | Excellent | Poor | Poor |
| Acidic Water** | Poor | Poor | Poor |
| Methanol (Polar Solvent) | Excellent | Poor | Poor |
| Gasoline (Non-Polar Solvent) | Good | Poor | Poor |

From the results it can be understood that the activating structure according to the present invention can activate various substances to be treated such as aqueous electrolyte solutions (seawater), organic polar solvents, and organic non-polar solvents.

In contrast, no activation of the substance to be treated could be observed in Comparative Structures TC2 and TC3.

EXAMPLE 19 (Comparison with the case of Warming)

Examples 15 was repeated utilizing the plate form activating structure T1 according to the present invention and the apparatus shown in FIG. 9. As a result, the generation of a gas in a larger amount was observed in comparison with the case utilizing the apparatus shown in FIG. 8 (liquid temperature 92°C) .

EXAMPLE 20

Examples 15 was repeated utilizing the plate form activating structure T1 according to the present invention and the apparatus shown in FIG. 10. As a result, the generation of a gas in a larger amount was observed in comparison with the case utilizing the apparatus shown in FIG. 8.

EXAMPLE 21

Examples 15 was repeated utilizing the plate form activating structure T1 according to the present invention and the apparatus shown in FIG. 11. As a result, the generation of a gas in a larger amount was observed in comparison with the case utilizing the apparatus shown in FIG. 8.

EXAMPLE 22

Examples 15 was repeated utilizing the plate form activating structure T1 according to the present invention and the apparatus shown in FIG. 12. As a result, the generation of a gas in a larger amount was observed in comparison with the case utilizing the apparatus shown in FIG. 8.

EXAMPLE 23

Examples 15 was repeated utilizing the plate form activating structure T1 according to the present invention and the apparatus shown in FIG. 13. As a result, the generation of a gas in a larger amount was observed in comparison with the case utilizing the apparatus shown in FIG. 8.

Examples 15 was repeated utilizing the plate form activating structure T1 according to the present invention and the apparatus shown in FIG. 14. As a result, the generation of a gas in a larger amount was observed in comparison with the case utilizing the apparatus shown in FIG. 8.

It can be proven from the results of Examples 21 to 23 that the activation of the substance can be accelerated by providing the heater (Example 21), the forcible stirrer (Example 22) and the oscillating element (Example 23).

EXAMPLE 25 (Pretreatment of Diesel Oil)

This example was carried out for the purpose of examining an influence of the activating structure upon fuel. Specifically, the powder produced in Example 1 was adhered with a resin, and then formed into globes having a diameter of 20 mm. The emission and the presence or absence of the effect for the fuel where four products were surrounded around a fuel supply line provided at the former stage of an automobile engine or no product was surrounded were confirmed utilizing a practical automobile with chassis dynamometer. As the fuel, a light oil having a sulfur content of 50 ppm was used. Five cruises of 20 km/h, 30 km/h, 40 km/h, 50 km/h, and 60 km/h were used for the examination.

As a result, it was recognized that the activating structure of the present invention is effective for decreasing a total hydrocarbon amount. This deduces that the activating structure of the present invention can effectively be used to enhance a fuel ratio. Of course, the activating structure of the present invention can be utilized for decreasing the air pollution.

EXAMPLES 26 to 28 (Deodorization Effects: panel Test)

Onto the apices of a regular tetrahedron having one side of 70 mm were placed the activating structures according to the present invention formed into a globe, or an activating structure in which a cupper is incorporated in the core (Example 26) , and cigarette's smoke was passed through the tetrahedron. The presence or absence of pungent smell was evaluated by seven people on two-point scale. As a result, all the seven members were evaluated to be the absence of the pungent smell.

Similarly, onto the apices of a regular tetrahedron having one side of 140 mm were placed the activating structures according to the present invention formed into a globe (Example 27), or an activating structure in which a cupper is incorporated in the core (Example 28), and cigarette's smoke was passed through the tetrahedron. The presence or absence of pungent smell was evaluated by seven people on two-point scale. As a result, all the seven members were evaluated to be the absence of the pungent smell.

From these results, it has been proven that when the cigarette's smoke was passed among the activating structures according to the present invention, the activating structures have an effect for activating a substance to be treated (i.e., decomposing bad smell of the cigarette's smoke).

EXAMPLE 29 (Activation of Water)

The activation of water was carried out utilizing the apparatus shown in FIG. 19. Specifically, the activating structures of the present invention obtained in Example 15 were placed around a passage having a diameter of 8 mm as shown in FIG. 19 (d), and distilled water was passed through the passage at a flow rate of 0.5 m/s.

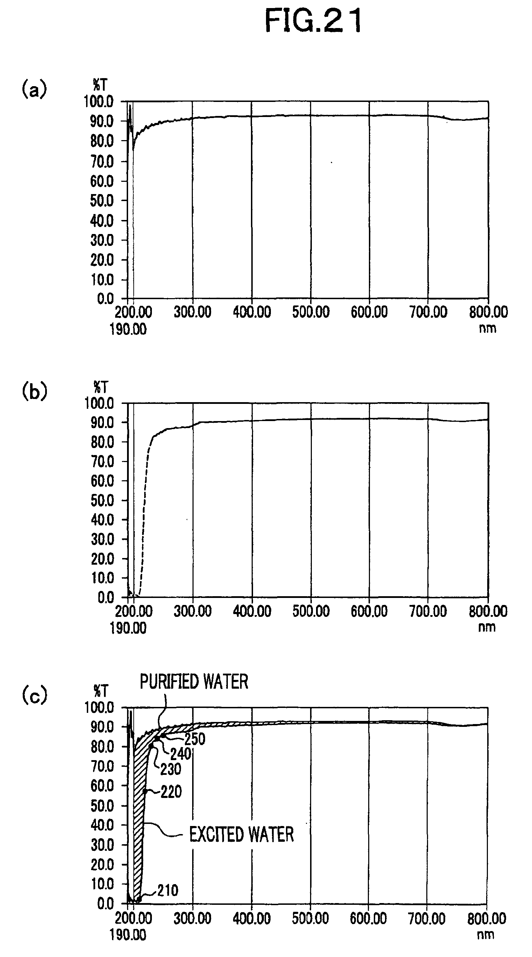

FIG. 21 shows ultraviolet spectra of the water before and after the treatment. FIG. 21 (a), which shows the ultraviolet spectra of the water before the treatment, does not indicate any significant peak. On the other hand, in the water after the treatment shown in FIG. 21 (b) , a significant absorbing band was observed around 200 nm (FIG. 21 (c) shows both spectra overlapped with each other for comparing the absorbing bands) .

From these results, it can be understood that the activating structure of the present invention (apparatus for activating a substance) can activate (excite) water.

INDUSTRIAL APPLICABILITY

As described above, the present invention exhibits the following outstanding effects.

By arranging particles consisting essentially of single element selected from the group consisting of silicon, titanium, nickel, and samarium or of carbon fluoride at the position where a wave motive energy inherent to each element or carbon fluoride is amplified, a high energy is generated among the particles, and, a wide variety of substances can be activated by this energy. The activating structure of the present invention can be handled like the existing catalyst. the activating structure of the present invention can activate a substance to be treated even under dark conditions. For example, the activating structure of the present invention may be accommodated within a light-impermeable housing to make up an apparatus for activating a substance to be treated.

**Claims**

1. An activating structure comprising particles consisting essentially of a single element selected from the group consisting of silicon, titanium, nickel, and samarium, or of a carbon fluoride placed in the position where a wave motion energy inherent to each of the elements or the carbon fluoride is amplified to make up an energy focused place among the particles.

2. The activating structure according to Claim 1, wherein said particles are arranged at the apices of a tetrahedron or the apices of a triangle.

3. The activating structure according to Claim 1, wherein said particles are in a globular form, and said particles are laminated in a plate state.

4. The activating structure according to Claim 2, wherein said particles are in a globular form, and said particles are laminated in a plate form.

5. The activating structure according to Claim 3, wherein the ratio of the length to breadth of said particle is not less than 0.3.

6. The activating structure according to Claim 4, wherein the ratio of the length to breadth of said particle is not less than 0.3.

7. The activating structure according to Claim 1, wherein said particles is formed into a plate.

8. The activating structure according to Claim 2, wherein said particles is formed into a plate.

9. The activating structure according to Claim 3, wherein said particles is formed into a plate.

10. The activating structure according to Claim 4, wherein said particles is formed into a plate.

11. The activating structure according to Claim 5, wherein said particles is formed into a plate.

12. The activating structure according to Claim 6, wherein said particles is formed into a plate.

13. The activating structure according to Claim 7, wherein said particles is formed into a plate.

14. The activating structure according to Claim 7, wherein said activating structure formed in a plate has a porosity of from 45 to 60%.

15. The activating structure according to Claim 8, wherein said activating structure formed in a plate has a porosity of from 45 to 60%.

16. The activating structure according to Claim 9, wherein said activating structure formed in a plate has a porosity of from 45 to 60%.

17. The activating structure according to Claim 10, wherein said activating structure formed in a plate has a porosity of from 45 to 60%.

18. The activating structure according to Claim 11, wherein said activating structure formed in a plate has a porosity of from 45 to 60%.

19. The activating structure according to Claim 12, wherein said activating structure formed in a plate has a porosity of from 45 to 60%.

20. The activating structure according to Claim 13, wherein said activating structure formed in a plate has a porosity of from 45 to 60%.

21. The activating structure according to Claim 7, wherein said activating structure formed in a plate has a cross-sectional structure of an I-shape, an L-shape, a U-shape, or an M-shape.

22. The activating structure according to Claim 8, wherein said activating structure formed in a plate has a cross-sectional structure of an I-shape, an L-shape, a U-shape, or an M-shape.

23. The activating structure according to Claim 9, wherein said activating structure formed in a plate has a cross-sectional structure of an I-shape, an L-shape, a U-shape, or an M-shape.

24. The activating structure according to Claim 10, wherein said activating structure formed in a plate has a cross-sectional structure of an I-shape, an L-shape, a U-shape, or an M-shape.

25. The activating structure according to Claim 11, wherein said activating structure formed in a plate has a cross-sectional structure of an I-shape, an L-shape, a U-shape, or an M-shape.

26. The activating structure according to Claim 12, wherein said activating structure formed in a plate has a cross-sectional structure of an I-shape, an L-shape, a U-shape, or an M-shape.

27. The activating structure according to Claim 13, wherein said activating structure formed in a plate has a cross-sectional structure of an I-shape, an L-shape, a U-shape, or an M-shape.

28. The activating structure according to Claim 14, wherein said activating structure formed in a plate has a cross-sectional structure of an I-shape, an L-shape, a U-shape, or an M-shape.

29. The activating structure according to Claim 15, wherein said activating structure formed in a plate has a cross-sectional structure of an I-shape, an L-shape, a U-shape, or an M-shape.

30. The activating structure according to Claim 16, wherein said activating structure formed in a plate has a cross-sectional structure of an I-shape, an L-shape, a U-shape, or an M-shape.

31. The activating structure according to Claim 17, wherein said activating structure formed in a plate has a cross-sectional structure of an I-shape, an L-shape, a U-shape, or an M-shape.

32. The activating structure according to Claim 18, wherein said activating structure formed in a plate has a cross-sectional structure of an I-shape, an L-shape, a U-shape, or an M-shape.

33. The activating structure according to Claim 19, wherein said activating structure formed in a plate has a cross-sectional structure of an I-shape, an L-shape, a U-shape, or an M-shape.

34. The activating structure according to Claim 20, wherein said activating structure formed in a plate has a cross-sectional structure of an I-shape, an L-shape, a U-shape, or an M-shape.

35. The activating structure according to Claim 1, wherein said activating structure is formed into a star-form; a disc form; a plate form having at least one pore, a globular form, an oval rotor, a gourd form or a honeycomb shape.

36. The activating structure according to Claim 2, wherein said activating structure is formed into a star-form; a disc form; a plate form having at least one pore, a globular form, an oval rotor, a gourd form or a honeycomb shape.

37. The activating structure according to Claim 3, wherein said activating structure is formed into a star-form; a disc form; a plate form having at least one pore, a globular form, an oval rotor, a gourd form or a honeycomb shape.

38. The activating structure according to Claim 4, wherein said activating structure is formed into a star-form; a disc form; a plate form having at least one pore, a globular form, an oval rotor, a gourd form or a honeycomb shape.

39. The activating structure according to Claim 5, wherein said activating structure is formed into a star-form; a disc form; a plate form having at least one pore, a globular form, an oval rotor, a gourd form or a honeycomb shape.

40. The activating structure according to Claim 6, wherein said activating structure is formed into a star-form; a disc form; a plate form having at least one pore, a globular form, an oval rotor, a gourd form or a honeycomb shape.

41. The activating structure according to any one of Claims 7 to 40, wherein said activating structure is formed by sintering said particles.

42. The activating structure according to any one of Claims 7 to 40, wherein said activating structure is used for librating hydrogen from water, hydrogen peroxide, an aqueous medium, a hydrocarbon or a mixture thereof, and recovering the librated hydrogen.

43. The activating structure according to Claim 42, wherein said activating structure is used for librating hydrogen from water, hydrogen peroxide, an aqueous medium, a hydrocarbon or a mixture thereof, and recovering the librated hydrogen.

44. An apparatus for activating a substance which comprises the activating structure according to any one of Claims 1 to 40 as a reactant, and which activates a substance to be treated by passing it through or staying it in the energy focused place of the activating structure.

45. The apparatus for activating a substance according to Claim 44, wherein said activating structure is placed in a fixed bed manner.

46. The apparatus for activating a substance according to Claim 44, wherein said activating structure is placed in a fluidized bed manner.

47. The apparatus for activating a substance according to Claim 45, which further comprises a container for accommodating said activating structure and said substance to be treated, so that the substance is passed through or stayed in the energy focused place in said activating structure, said container possessing a heater for heating said substance.

48. The apparatus for activating a substance according to Claim 46, which further comprises a container for accommodating said activating structure and said substance to be treated, so that the substance is passed through or stayed in the energy focused place in said activating structure, said container possessing a heater for heating said substance.

49. The apparatus for activating a substance according to Claim 47, which further comprises a container for accommodating said activating structure and said substance to be treated, so that the substance is passed through or stayed in the energy focused place in said activating structure, said container possessing a heater for heating said substance.

50. The apparatus for activating a substance according to Claim 45, which further comprises a container for accommodating said activating structure and said substance to be treated, so that the substance is passed through or stayed in the energy focused place in said activating structure, said container possessing a circulator for forcibly circulating said substance.

51. The apparatus for activating a substance according to Claim 46, which further comprises a container for accommodating said activating structure and said substance to be treated, so that the substance is passed through or stayed in the energy focused place in said activating structure, said container possessing a circulator for forcibly circulating said substance.

52. The apparatus for activating a substance according to Claim 47, which further comprises a container for accommodating said activating structure and said substance to be treated, so that the substance is passed through or stayed in the energy focused place in said activating structure, said container possessing a circulator for forcibly circulating said substance.

53. The apparatus for activating a substance according to Claim 45, which further comprises a container for accommodating said activating structure and said substance to be treated, so that the substance is passed through or stayed in the energy focused place in said activating structure, said container possessing a movement mechanism, which relatively moves the area of said activating structure in contact with the substance in the vertical direction.

54. The apparatus for activating a substance according to Claim 46, which further comprises a container for accommodating said activating structure and said substance to be treated, so that the substance is passed through or stayed in the energy focused place in said activating structure, said container possessing a movement mechanism, which relatively moves the area of said activating structure in contact with the substance in the vertical direction.

55. The apparatus for activating a substance according to Claim 47, which further comprises a container for accommodating said activating structure and said substance to be treated, so that the substance is passed through or stayed in the energy focused place in said activating structure, said container possessing a movement mechanism, which relatively moves the area of said activating structure in contact with the substance in the vertical direction.

56. The apparatus for activating a substance according to Claim 45, which further comprises a mechanism for generating a turbulence.

57. The apparatus for activating a substance according to Claim 46, which further comprises a mechanism for generating a turbulent flow.

58. The apparatus for activating a substance according to Claim 47, which further comprises a mechanism for generating a turbulent flow.

59. An apparatus for activating a substance to be treated comprising activating portions composed of the activating structure according to any one of Claims 7 to 40 placed so as to have a gap between said activating portions, and activating the substance by passing said substance through or staying in said substance in said gap.

60. The apparatus for activating a substance according to Claim 59, wherein said activating structure comprises a plurality of the activating structure formed into a globular form, which are arranged at the apices of a tetrahedron or the apices of a triangle.

61. A gas generator comprising the activating structure according to any one of Claims 1 to 40 as a reactant, and activating the substance by passing said substance through or staying in the energy focused place to generate a gas.

62. The gas generator according to Claim 61, which further comprises a separator, which separates and recovers a desirable gas from the generated gas.

63. A gas generator comprising:

    a container for treatment in which the activating structure is filled; and
    at least one activating structure according to any one of Claims 7 to 34 provided within said container for a treatment in a direction such that the generated gas is floated upwardly.

64. The gas generator according to Claim 63, which further comprises a separator, which separates and recovers a desirable gas from the generated gas.

**65.** The gas generator according to Claim 63, wherein said container possesses a heater for heating said substance.

**66.** The gas generator according to Claim 64, wherein said container possesses a heater for heating said substance.

**67.** The gas generator according to Claim 63, wherein said container possesses a circulator for forcibly circulating said substance.

**68.** The gas generator according to Claim 64, wherein said container possesses a circulator for forcibly circulating said substance.

**69.** The gas generator according to Claim 63, wherein said container possesses a movement mechanism, which relatively moves the area of said activating structure in contact with the substance in the vertical direction.

**70.** The gas generator according to Claim 64, wherein said container possesses a movement mechanism, which relatively moves the area of said activating structure in contact with the substance in the vertical direction.

**71.** The gas generator according to Claim 63 , which further comprises a mechanism for generating a turbulent flow of said substance.

**72.** The gas generator according to Claim 64, which further comprises a mechanism for generating a turbulent flow of said substance.

**73.** A gas generator comprising:

a container for treatment in which the activating structure is filled; and
the activating structure according to any one of Claims 7 to 34 provided within said container for a treatment so as to divide the container in the vertical direction.

**74.** The gas generator according to Claim 73, which further comprises a separator, which separates and recovers a desirable gas from the generated gas.

**75.** The gas generator according to Claim 73, wherein said container possesses a heater for heating said substance.

**76.** The gas generator according to Claim 74, wherein said container possesses a heater for heating said substance.

**77.** The gas generator according to Claim 73, wherein said container possesses a circulator for forcibly circulating said substance.

**78.** The gas generator according to Claim 74, wherein said container possesses a circulator for forcibly circulating said substance.

**79.** The gas generator according to Claim 73, wherein said container possesses a movement mechanism, which relatively moves the area of said activating structure in contact with the substance in the vertical direction.

**80.** The gas generator according to Claim 74, wherein said container possesses a movement mechanism, which relatively moves the area of said activating structure in contact with the substance in the vertical direction.

**81.** The gas generator according to Claim 73, which further comprises a mechanism for generating a turbulent flow of said substance.

**82.** The gas generator according to Claim 74, which further comprises a mechanism for generating a turbulent flow of said substance.

**83.** The gas generator according to Claim 61, wherein said substance is water, hydrogen peroxide, an aqueous medium, a hydrocarbon, or a mixture thereof, and is passed through or stayed in the energy-focused portion of said activating structure to generate hydrogen.

**84.** The gas generator according to Claim 62, wherein said substance is water, hydrogen peroxide, an aqueous medium, a hydrocarbon, or a mixture thereof, and is passed through or stayed in the energy-focused portion of said activating structure to generate hydrogen.

85. The gas generator according to Claim 63, wherein said substance is water, hydrogen peroxide, an aqueous medium, a hydrocarbon, or a mixture thereof, and is passed through or stayed in the energy-focused portion of said activating structure to generate hydrogen.

86. The gas generator according to Claim 64, wherein said substance is water, hydrogen peroxide, an aqueous medium, a hydrocarbon, or a mixture thereof, and is passed through or stayed in the energy-focused portion of said activating structure to generate hydrogen.

87. The gas generator according to Claim 65, wherein said substance is water, hydrogen peroxide, an aqueous medium, a hydrocarbon, or a mixture thereof, and is passed through or stayed in the energy-focused portion of said activating structure to generate hydrogen.

88. The gas generator according to Claim 66, wherein said substance is water, hydrogen peroxide, an aqueous medium, a hydrocarbon, or a mixture thereof, and is passed through or stayed in the energy-focused portion of said activating structure to generate hydrogen.

89. The gas generator according to Claim 67, wherein said substance is water, hydrogen peroxide, an aqueous medium, a hydrocarbon, or a mixture thereof, and is passed through or stayed in the energy-focused portion of said activating structure to generate hydrogen.

90. The gas generator according to Claim 68, wherein said substance is water, hydrogen peroxide, an aqueous medium, a hydrocarbon, or a mixture thereof, and is passed through or stayed in the energy-focused portion of said activating structure to generate hydrogen.

91. The gas generator according to Claim 69, wherein said substance is water, hydrogen peroxide, an aqueous medium, a hydrocarbon, or a mixture thereof, and is passed through or stayed in the energy-focused portion of said activating structure to generate hydrogen.

92. The gas generator according to Claim 70, wherein said substance is water, hydrogen peroxide, an aqueous medium, a hydrocarbon, or a mixture thereof, and is passed through or stayed in the energy-focused portion of said activating structure to generate hydrogen.

93. The gas generator according to Claim 71, wherein said substance is water, hydrogen peroxide, an aqueous medium, a hydrocarbon, or a mixture thereof, and is passed through or stayed in the energy-focused portion of said activating structure to generate hydrogen.

94. The gas generator according to Claim 72, wherein said substance is water, hydrogen peroxide, an aqueous medium, a hydrocarbon, or a mixture thereof, and is passed through or stayed in the energy-focused portion of said activating structure to generate hydrogen.

95. The gas generator according to Claim 73, wherein said substance is water, hydrogen peroxide, an aqueous medium, a hydrocarbon, or a mixture thereof, and is passed through or stayed in the energy-focused portion of said activating structure to generate hydrogen.

96. The gas generator according to Claim 74, wherein said substance is water, hydrogen peroxide, an aqueous medium, a hydrocarbon, or a mixture thereof, and is passed through or stayed in the energy-focused portion of said activating structure to generate hydrogen.

97. The gas generator according to Claim 75, wherein said substance is water, hydrogen peroxide, an aqueous medium, a hydrocarbon, or a mixture thereof, and is passed through or stayed in the energy-focused portion of said activating structure to generate hydrogen.

98. The gas generator according to Claim 76, wherein said substance is water, hydrogen peroxide, an aqueous medium, a hydrocarbon, or a mixture thereof, and is passed through or stayed in the energy-focused portion of said activating structure to generate hydrogen.

**EP 1 364 703 A1**

99. The gas generator according to Claim 77, wherein said substance is water, hydrogen peroxide, an aqueous medium, a hydrocarbon, or a mixture thereof, and is passed through or stayed in the energy-focused portion of said activating structure to generate hydrogen.

100. The gas generator according to Claim 78, wherein said substance is water, hydrogen peroxide, an aqueous medium, a hydrocarbon, or a mixture thereof, and is passed through or stayed in the energy-focused portion of said activating structure to generate hydrogen.

101. The gas generator according to Claim 79, wherein said substance is water, hydrogen peroxide, an aqueous medium, a hydrocarbon, or a mixture thereof, and is passed through or stayed in the energy-focused portion of said activating structure to generate hydrogen.

102. The gas generator according to Claim 80, wherein said substance is water, hydrogen peroxide, an aqueous medium, a hydrocarbon, or a mixture thereof, and is passed through or stayed in the energy-focused portion of said activating structure to generate hydrogen.

103. The gas generator according to Claim 81, wherein said substance is water, hydrogen peroxide, an aqueous medium, a hydrocarbon, or a mixture thereof, and is passed through or stayed in the energy-focused portion of said activating structure to generate hydrogen.

104. The gas generator according to Claim 82, wherein said substance is water, hydrogen peroxide, an aqueous medium, a hydrocarbon, or a mixture thereof, and is passed through or stayed in the energy-focused portion of said activating structure to generate hydrogen.

105. A hydrogen generating system having the hydrogen generator according to Claim 83 provided thereon.

106. A hydrogen generating system having the hydrogen generator according to Claim 84 provided thereon.

107. A hydrogen generating system having the hydrogen generator according to Claim 85 provided thereon.

108. A hydrogen generating system having the hydrogen generator according to Claim 86 provided thereon.

109. A hydrogen generating system having the hydrogen generator according to Claim 95 provided thereon.

110. A hydrogen generating system having the hydrogen generator according to Claim 86 provided thereon.

111. The hydrogen generating system according to Claim 105, wherein said gas generator is an auxiliary apparatus for generating hydrogen.

112. The hydrogen generating system according to Claim 106, wherein said gas generator is an auxiliary apparatus for generating hydrogen.

113. The hydrogen generating system according to Claim 107, wherein said gas generator is an auxiliary apparatus for generating hydrogen.

114. The hydrogen generating system according to Claim 108, wherein said gas generator is an auxiliary apparatus for generating hydrogen.

115. The hydrogen generating system according to Claim 109, wherein said gas generator is an auxiliary apparatus for generating hydrogen.

116. The hydrogen generating system according to Claim 110, wherein said gas generator is an auxiliary apparatus for generating hydrogen.

117. A vehicle having the hydrogen generating system according to Claim 105 provided thereon.

118. A vehicle having the hydrogen generating system according to Claim 106 provided thereon.

**119.**A vehicle having the hydrogen generating system according to Claim 107 provided thereon.

**120.**A vehicle having the hydrogen generating system according to Claim 108 provided thereon.

**121.**A vehicle having the hydrogen generating system according to Claim 109 provided thereon.

**122.**A vehicle having the hydrogen generating system according to Claim 110 provided thereon.

**123.**The gas generator according to Claim 61, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**124.**The gas generator according to Claim 62, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**125.**The gas generator according to Claim 63, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**126.**The gas generator according to Claim 64, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**127.**The gas generator according to Claim 65, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**128.**The gas generator according to Claim 66, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**129.**The gas generator according to Claim 67, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**130.**The gas generator according to Claim 68, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**131.**The gas generator according to Claim 69, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**132.**The gas generator according to Claim 70, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**133.**The gas generator according to Claim 71, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**134.**The gas generator according to Claim 72, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

**135.**The gas generator according to Claim 73, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

136. The gas generator according to Claim 74, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

137. The gas generator according to Claim 75, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

138. The gas generator according to Claim 76, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

139. The gas generator according to Claim 77, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

140. The gas generator according to Claim 78, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

141. The gas generator according to Claim 79, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

142. The gas generator according to Claim 80, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

143. The gas generator according to Claim 81, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

144. The gas generator according to Claim 82, wherein said substance is water, hydrogen peroxide, an aqueous medium, a hydrocarbon, or a mixture thereof, and is passed through or stayed in the energy-focused portion of said activating structure to generate a mixed gas comprising hydrogen, oxygen, and nitrogen.

145. A process for activating a substance, which comprises passing a substance to be treated through or staying a substance to be treated in the energy focused place of the activating structure according to any one of Claims 1 to 40 to activate the substance.

146. The process for activating a substance according to Claim 145, wherein said substance to be treated is a liquid fuel, and said process comprises decreasing total hydrocarbon amount to enhance the fuel ratio.

147. An apparatus for purifying a fuel, which comprises the activating structure according to any one of Claims 1 to 40.

148. The process for activating a substance according to Claim 145, wherein said substance to be treated is an ethylene gas generated from a vegetable or fruit, and said process comprises decomposing the ethylene gas by the activating structure to maintain the freshness of the vegetable or fruit.

149. An apparatus for maintaining freshness of a vegetable or fruit, which comprises the activating structure according to any one of Claims 1 to 40.

150. The process for activating a substance according to Claim 145, wherein said substance to be treated is a harmful gas, and said process comprises decomposing the harmful gas by the activating structure.

151. The process for activating a substance according to Claim 150, wherein said harmful gas is a smoke of cigarette.

**152.** The process for activating a substance according to Claim 150, wherein said apparatus for activating a substance is placed within a flue to decompose a harmful gas in the flue.

**153.** A deodorizing apparatus comprising the activating structure according to any one of Claims 1 to 40.

**154.** The process for activating a substance according to Claim 145, wherein said substance is hydrogen from water, hydrogen peroxide, an aqueous medium, a hydrocarbon or a mixture thereof, and said process comprises librating hydrogen by passing it through or staying it in the energy focused place of said activating structure, and then recovering the librated hydrogen.

**155.** The process for activating a substance according to Claim 145, wherein said substance is hydrogen from water, hydrogen peroxide, an aqueous medium, a hydrocarbon or a mixture thereof, and said process comprises generating a mixed gas comprising hydrogen, oxygen, and nitrogen.

**156.** The process for activating a substance according to Claim 155, which further comprises separating said mixed gas into hydrogen and a mixed gas comprising oxygen, and nitrogen.

**157.** A process for producing an activating structure, which comprises:

(a) forming particles consisting essentially of a single element selected from the group consisting of silicon, titanium, nickel, and samarium, or of a carbon fluoride;
(b) subjecting the particles obtained in the stage (1) to an antistatic treatment; and
(c) placing the particles having been subjected to the antistatic treatment in the stage (2) in the position where a wave motion energy is amplified, followed by sintering.

# FIG.1

(a)

(b)

(c)

(d)

# FIG.2

(a) THE PRESENT INVENTION

(b) COMPARATIVE

# FIG.3

(a)

(b)

(c)

(d)

# FIG.4

(a)

(b)

(c)

# FIG.5

(a)

(b)

(c)

(d)

(e)

(f)

(g)

# FIG.6

(a)

(b)

(c)

(d)

(e)

(f)

# FIG.7

# FIG.8

(a)

(b)

# FIG.9

# FIG.10

(a)

(b)

# FIG.11

(a)

(b)

# FIG.12

# FIG.13

(a)

(b)

# FIG.14

# FIG.15

# FIG>16

# FIG.17

(a)

(b)

(c)

(d)

# FIG.18

EP 1 364 703 A1

# FIG.19

(a)

(b)

(c)

(d)

# FIG.20

EP 1 364 703 A1

# FIG.21

(a)

(b)

(c)

# FIG.22

(a)

(b)

(c)

# FIG.23

**EP 1 364 703 A1**

| INTERNATIONAL SEARCH REPORT | International application No. |
|---|---|
| | PCT/JP02/00642 |

A. CLASSIFICATION OF SUBJECT MATTER
Int.Cl⁷ B01J19/08, C01B3/04, 3/22, C10G15/00, C09K3/00, A23B7/144

According to International Patent Classification (IPC) or to both national classification and IPC

B. FIELDS SEARCHED

Minimum documentation searched (classification system followed by classification symbols)
Int.Cl⁷ B01J19/08, C01B3/04, 3/22, C10G15/00, C09K3/00, A23B7/144

Documentation searched other than minimum documentation to the extent that such documents are included in the fields searched
Jitsuyo Shinan Koho                1926–1996      Toroku Jitsuyo Shinan Koho    1994–2002
Kokai Jitsuyo Shinan Koho    1971–2002      Jitsuyo Shinan Toroku Koho    1996–2002

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP, 4-59601, A (Asahikasei K.K.), 26 February, 1992 (26.02.92), (Full text) (Family: none) | 1-6,42-49,61, 62,83,84,105, 106,111,112, 123,124,145, 154-156 |
| Y | | 7-68,71-78, 81-90,93-100, 103-130,133- 140,143-145, 154-157 |
| A | | 69,70,79,80, 91,92,101, 102,131,132, 141,142 |

☒ Further documents are listed in the continuation of Box C.    ☐ See patent family annex.

| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
|---|---|
| Date of the actual completion of the international search <br> 28 February, 2002 (28.02.02) | Date of mailing of the international search report <br> 12 March, 2002 (12.03.02) |
| Name and mailing address of the ISA/ <br> Japanese Patent Office | Authorized officer |
| Facsimile No. | Telephone No. |

Form PCT/ISA/210 (second sheet) (July 1998)

62

## INTERNATIONAL SEARCH REPORT

| International application No. |
|---|
| PCT/JP02/00642 |

**C (Continuation).   DOCUMENTS CONSIDERED TO BE RELEVANT**

| Category* | Citation of document, with indication, where appropriate, of the relevant passages | Relevant to claim No. |
|---|---|---|
| X<br>Y | Kagakudaijiten, Vol.3, pages 853 to 854, 「Samarium」, (edited by Kagakudaijiten Henshuiinkai· published by Kyoritsu Shuppan Co.,Ltd.), 1979.11.10 | 1-6,42,43<br>7-68,71-90,<br>93-100,103-<br>130,133-140,<br>143-145,<br>154-157 |
| X | JP, 2000-296393, A  (Kuniaki TAKAMATSU),<br>24 October, 2000 (24.10.00),<br>(Claims; koho, column 3, lines 3 to 20)<br>(Family: none) | 1-6,44,45,<br>145 |
| Y | JP, 1-27642, A  (Kobe Steel, Ltd.),<br>30 January, 1989 (30.01.89),<br>(Claims; koho, page 3, upper right column, line 3 to lower left column, line 11)<br>(Family: none) | 7-34,41,59,<br>63-68,71,72,<br>74-82,85-90,<br>93-100,103,<br>104,107-110,<br>113-112,125-<br>130,133,134,<br>136-140,143,<br>144,157 |
| Y | JP, 49-106487, A  (Toyota Central Research And Development Laboratories, Inc.),<br>09 October, 1974 (09.10.74),<br>(Claims; Examples)<br>& US 3900429 A          & GB 1460222 A | 35-41,59,60 |
| Y | JP, 11-79701, A  (Manabu SASAKI),<br>23 March, 1999 (23.03.99),<br>(Claims; koho, column 3, lines 4 to 40; column 4, lines 1 to 32)<br>(Family: none) | 50-52,56-58,<br>67,68,71,72,<br>77,78,89,90,<br>93,94,129,<br>130,133,134 |
| Y | JP, 2000-53401, A  (World Fusion Ltd.),<br>22 February, 2000 (22.02.00),<br>(Claims; column 7, lines 2 to 26)<br>(Family: none) | 117-122 |
| Y | JP, 7-24739, A  (Hitachi, Ltd.),<br>27 January, 1995 (27.01.95),<br>(Claims; Examples)<br>(Family: none) | 157 |
| Y | JP, 10-122067, A  (Hiroshi YOSHIMORI),<br>12 May, 1998 (12.05.98),<br>(Claims; koho, column 3, lines 20 to 40; column 7, lines 9 to 22)<br>(Family: none) | 1-41,44-60,<br>146,147 |
| Y | JP, 11-290858, A  (Dora K.K.),<br>26 October, 1999 (26.10.99),<br>(Claims; koho, column 2, lines 20 to 24; column 4, lines 16 to 39)<br>(Family: none) | 1-41,44-60,<br>146,147 |

Form PCT/ISA/210 (continuation of second sheet) (July 1998)

## INTERNATIONAL SEARCH REPORT

International application No.

PCT/JP02/00642

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP, 8-172022, A (Akihisa UEDA),<br>02 July, 1996 (02.07.96),<br>(Claims; koho, column 2, lines 19 to 42)<br>(Family: none) | 1-41,44-60,<br>146,147 |
| Y | JP, 11-123325, A (Yasuro KURATOMI),<br>11 May, 1999 (11.05.99),<br>(Full text)<br>& WO 95/1835 A | 1-41,44-60,<br>146,147 |
| Y | JP, 11-216365, A (Tao Inc.),<br>10 August 1999 (10.08.99),<br>(Full text)<br>& EP 911078 A | 1-41,44-60,<br>148-153 |
| Y | JP, 9-296364, A (Lion Corp.),<br>18 November, 1997 (18.11.97),<br>(Claims 2; koho, column 4, lines 1 to 8)<br>(Family: none) | 1-41,44-60,<br>148-153 |
| A | JP, 11-151486, A (NKK Corp.),<br>08 June, 1999 (08.06.99),<br>(Koho, column 5, lines 1 to 39)<br>(Family: none) | 69,70,79,80,<br>91,92,101,<br>102,131,132,<br>141,142 |

Form PCT/ISA/210 (continuation of second sheet) (July 1998)